# EUROPEAN PATENT APPLICATION

(11) **EP 2 830 067 A1**
(43) Date of publication of application: **28.01.2015**
(21) Application number: 13763467.1
(22) Date of filing: 14.03.2013
(51) Int. Cl.: G11B 7/007, G11B 7/005, G11B 7/24082, G11B 20/12

(54) **OPTICAL DISK RECORDING MEDIUM, OPTICAL DISK DEVICE, AND RECORDING METHOD**

(30) Priority: 21.03.2012 JP 2012063619
(71) Applicant: Panasonic Corporation, Kadoma-shi, Osaka 571-8501 (JP)
(72) Inventor: HINO, Yasumori, Chuo-ku, Osaka 540-6207 (JP); NAKATA, Kohei, Chuo-ku, Osaka 540-6207 (JP); TAKAHASHI, Yoshihisa, Chuo-ku, Osaka 540-6207 (JP)
(74) Representative: Schwabe - Sandmair - Marx
(86) International application number: PCT/JP2013/001684
(87) International publication number: WO 2013/140756

(57) **Abstract**

An integral multiple of a period of wobbling in a portion other than address information of groove tracks (105, 107) is consistent with a length of one circumference of each of the groove tracks (105, 107), an integral multiple of a period of the address information is consistent with the length of one circumference of each of the groove tracks (105, 107), and pieces of information that differ between adjacent groove tracks (105, 107) among the address information is recorded by a predetermined wobble pattern which at least differs between the adjacent groove tracks (105, 107).

## Description

### Technical Field

The present invention relates to an optical disk recording medium on which data is optically recorded, an optical disk device which records data on the optical disk recording medium, and a recording method of recording data on the optical disk recording medium.

### Background Art

Currently, various types of optical disks including a DVD and a Blu-ray Disc (hereinafter, referred to as a BD) are being used as information recording media for storing images and data. Such optical disks have a higher storage reliability than a hard disk device (hereinafter, referred to as an HDD) or a magnetic tape. Therefore, applications of optical disks are being expanded from conventional applications of recording AV (audio/video) data such as images and sounds to applications of storing data over long periods of time.

However, the amount of data that can be stored per cubic volume of an optical disk is only around 1/3 of that of an HDD or a magnetic tape. Therefore, from the perspective of space efficiency during storage, there are demands for technological developments that enable an increase in the amount of data that can be stored per cubic volume without raising the cost of optical disks, and research and development are being continuously carried out in an energetic manner. Recently, BDXL (with a recording density of approximately 33,4 GB per layer) is being marketed as an optical disk with the highest volume recording density among BDs.

Such optical disks are capable of storing data for 50 years or longer. Therefore, from the perspective of long-term storage of data, optical disks have a storage reliability that is 10 or more times longer than the lifespan of HDDs which is around 5 years. Accordingly, by transferring data for long-term storage from an HDD to an optical disk, a balance between long-term storage reliability and a reduction of storage cost can be achieved. In particular, compared to an HDD which consumes power during data storage, an optical disk which does not require power during data storage is capable of reducing carbon dioxide emissions as a green storage and can contribute to reducing power consumption at data centers which has become a major concern in recent years.

However, even with a BDXL which boasts the highest recording density among optical disks, the amount of data that can be stored per volume is only around 1/3 of that of an HDD. Therefore, optical disks require a greater storage space than HDDs during data storage and, in particular, with applications such as data centers where cost demands related to storage spaces are high, there is a need to improve the recording density per volume of optical disks.

Techniques for improving the recording density per volume of an optical disk include a land-groove recording/reproducing technique which is capable of improving track recording. This technique is used in DVD-RAMs and increases recording density of a track by recording data, which has conventionally been recorded only on grooves or on tracks, on both grooves and tracks.

Normally, when the recording density on tracks of an optical disk is increased, diffracted light from a groove track which is necessary for an optical beam to control tracing of the groove becomes smaller and the optical beam becomes unable to trace the track. When λ denotes a wavelength of an optical beam irradiated on an optical disk and NA denotes a numerical aperture of a lens that forms the optical beam, if a track spacing L between grooves or lands becomes smaller than λ/NA x 0.6, diffracted light can no longer be detected from a groove and control for tracing a track cannot be performed. With a DVD whose numerical aperture NA is 0.6 and optical beam wavelength λ is 650 nm, a limit of track spacing L at which diffracted light can be detected is 650 nm. With a DVD-RAM, by recording data on both lands and grooves, a track pitch of 615 nm is realized and track density is increased (for example, refer to Patent Literature 1).

With an optical disk used to record data in both lands and grooves as described above, in particular, special measures must be taken with respect to addresses recorded on the optical disk in order to access a position where data is to be recorded. This is because recording data on both lands and grooves requires addresses to be allocated at high density. Conventionally, address allocation techniques include CAPA (Complementary Allocated Pit Address) (for example, refer to Patent Literature 2) that is used in DVD-RAMs and a technique that involves wobbling only a groove wall on one side to record address information. In addition, Patent Literature 3 discloses a system which is used in Blu-ray Discs and which only uses grooves as recording tracks.

Furthermore, a bonding technique in which two optical disks created by a same process are bonded together to form a single optical disk in order to increase volume density has also been put to practical use in DVDs. Since bonding together two optical disks also improves physical properties related to the shape of optical disks such as warping during long-term storage, optical disks having recording surfaces on both sides are being used as optical disks for long-term storage. Reproduction techniques such as changing directions of rotation of a motor are used to reproduce an optical disk having recording surfaces on both sides at high speed (for example, refer to Patent Literature 4).

Problems that arise when using an optical disk as a medium suitable for long-term storage will be described below.

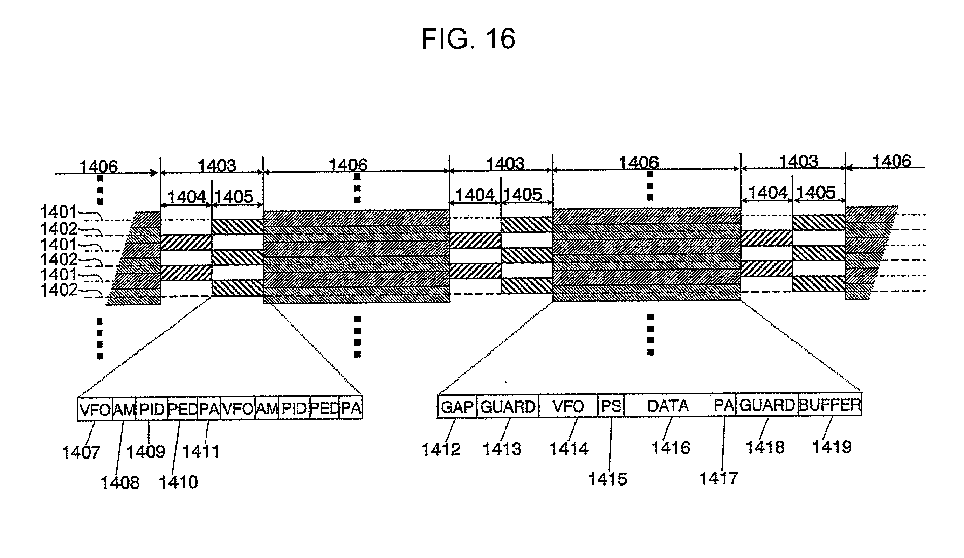

The conventional art described in Patent Literature 1 which is used in DVD-RAMs and which has been devised in order to increase recording density in a recording surface of an optical disk will now be described with reference to Fig. 16.

Fig. 16 is a diagram for describing a format of a conventional optical disk. In Fig. 16, a recording track 1401 is constituted by a land and a recording track 1402 is constituted by a groove. An address area 1403 is an area provided for accessing an area in which data is recorded and is constituted by pre-recorded pits formed on the optical disk. Address parts 1404 and 1405 are referred to as CAPA and are shifted in a radial direction by one-half track pitch from a center of a track. A data recording area 1406 is a recording sector for recording data.

The address parts 1404 and 1405 are constituted by a VFO (Variable Frequency Oscillator) 1407 for generating a synchronizing clock for decoding an address, an AM (address mark) 1408 for identifying a start of address data, a PID (Physical Identification Data) 1409 which represents address data, a PED (PID Error Detecting code) 1410 for correcting an error in the address data 1409, and a PA (postamble) 1411 which represents an end of address data. Among the series of addresses, same data is recorded twice in the address part 1404 in a first half of the address area 1403, and the same data is also recorded twice in the address part 1405 in a second half of the address area 1403.

The data recording area 1406 is an area for recording user data. In a similar manner to the address area 1403, the data recording area 1406 is divided into a plurality of areas necessary for reproducing recorded data after the data is recorded. The data recording area 1406 is constituted by a GAP 1412 which is provided for avoiding interference from the address area 1403, a GUARD 1413 which represents an interference area when a recording position of recording data is offset, a VFO (Variable Frequency Oscillator) 1414 for generating a motivation clock for decoding a recording, a PA (postamble) 1415 for identifying a start of recording data, DATA 1416 which represents a recording data area for recording data on the optical disk, a PA (postamble) 1417 for identifying an end of recording data, a GUARD 1418 which represents an interference area when a recording position of recording data is offset, and a BUFFER 1419 which is provided for avoiding interference from the address area 1403.

With an optical disk which uses DVD-RAM technology and in which data is recorded on both lands and grooves, the address area 1403 for identifying a position where data is to be recorded and the data recording area 1406 for recording data must be separated from one another. The addresses of a groove and a land are shared a address that is shifted in a radial direction by one-half track pitch from a center of a track, because the addresses cannot be independently recorded on both a land and a groove. With an optical disk in which data is only recorded in a groove such as a DVD±R or a Blu-ray Disc, since addresses are multiplexed by wobbling a groove, an address area and a data recording area need not be separated from each other.

However, when track density is increased by a land-groove technique, a problem is caused that address data cannot be multiplexed in a data recording area and the data recording area ends up being wasted. In addition, with a land-groove technique which reduces track spacing, since the address area 1403 and the data recording area 1406 are separated from each other, address data or recording data must each be independently demodulated.

Therefore, as shown in Fig. 16, various areas (VFO 1407, AM 1408, PA 1411, GAP 1412, GUARD 1413, VFO 1414, PS 1415, PA 1417, GUARD 1418, and BUFFER 1419) for independently demodulating data must be independently provided in the address area 1403 and the data recording area 1406. These areas are useless as far as the data recording area is concerned and reduce format use efficiency.

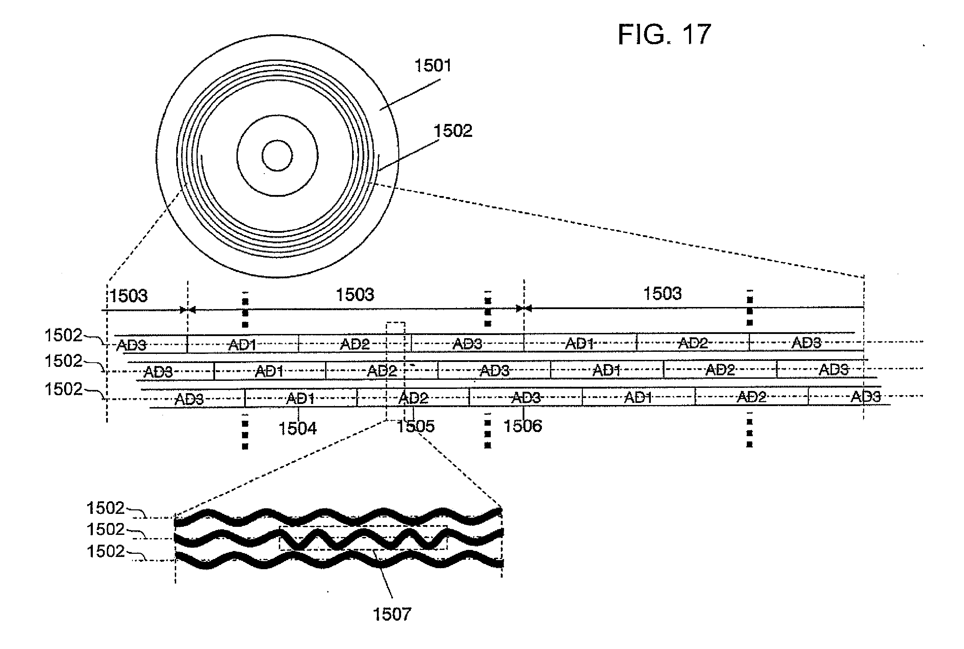

On the other hand, with an optical disk in which data is only recorded in a groove such as a DVD±R or a Blu-ray Disc, addresses necessary for recording data cannot be formed on both a groove and a land. Fig. 17 is a diagram for describing a format of another conventional optical disk. A relationship between address information and recording data in a Blu-ray Disc will be described with reference to Fig. 17. In addition, a reason why conventional techniques are incapable of allocating addresses in both a land and a groove and multiplexing and recording address information and recording data in a same area.

In Fig. 17, a recording track 1502 is formed by a groove on an optical disk 1501. Data is recorded in a data recording area 1503, and address information for accessing the data recording area 1503 is recorded in address information areas 1504, 1505, and 1506. Address information is allocated in a same area as recording data, and recording data is recorded by being multiplexed on address information. One piece of recording data is recorded in an area constituted by three pieces of address information AD1 (Z05), AD2 (Z06), and AD3 (Z07), and the area constituted by the three pieces of address information becomes the data recording area 1503 that is a recording unit of data. An integral multiple of a length of the data recording area 1503 that is constituted by the three pieces of address information is not consistent with a length of a circumference of a track. Therefore, as shown in Fig. 17, a position on a circumference of the data recording area 1503 between adjacent recording tracks is allocated by being offset every circumference of the optical disk.

In the recording track 1502, 1 bit of the pieces of address information AD1, AD2, and AD3 is recorded by partially altering a waveform of a groove that is wobbled at a predetermined period. An area 1507 shown enlarged at the bottom of Fig. 17 is a portion corresponding to an address bit and is subjected to modulation that is referred to as MSK (Minimum Shift Keying). In addition, as shown in the bottom of Fig. 17, since an integral multiple of a wobble period is not consistent with a length of one circumference of a recording track, phases of wobbles vary by a predetermined amount between adjacent recording tracks.

With an optical disk configured as described above, in order to increase track density by recording data on a land (between adjacent recording tracks 1502), address information for accessing a land must also be imparted to the land. However, with a system in which address information is recorded by wobbling a groove, unique address information cannot be imparted to a land. In addition, since the two grooves adjacent to a land are both independently wobbled and pieces of address information are respectively recorded on the grooves, when the land is traced, addresses of both recording tracks are simultaneously reproduced. As a result, demodulation becomes totally impossible.

Furthermore, with an optical disk configured as described above, while groove width is constant, land width is affected by wobbling of the grooves and therefore varies. As a result, when data is recorded on a land, a variation in groove width adversely affects the land and reproduction performance declines significantly. As shown, with a system in which recording data is recorded multiplexed on a recording track on which address information has been recorded by wobbling of a groove, since an address area need not be independently secured as is the case of DVD-RAMs described earlier, format use efficiency can be improved. However, when increasing recording density in a track direction, since address information cannot be imparted on a land, there is a fundamental problem that the land cannot be used as a recording track and recording density cannot be increased.

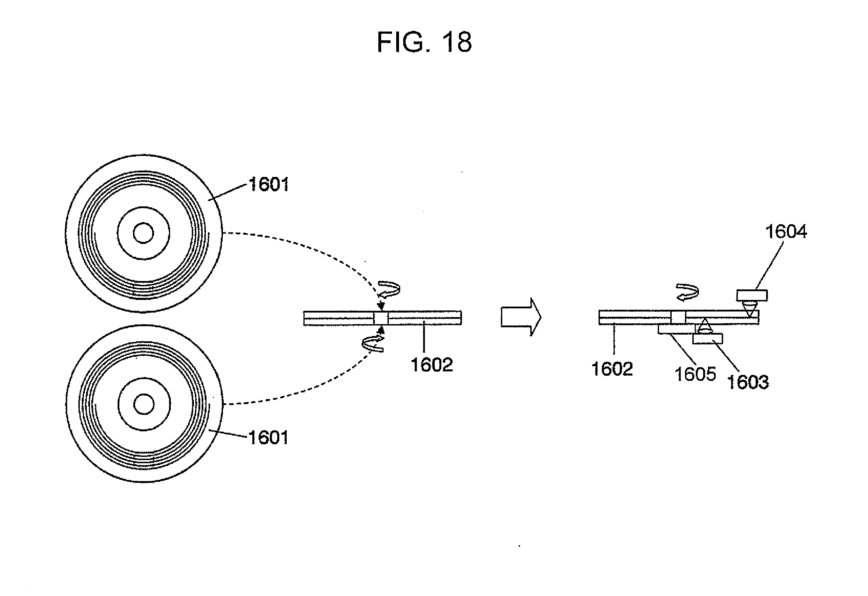

In addition, one way to increase recording density per volume is to bond together two 0.6 mm-thick optical disks to create a single optical disk with a thickness of 1.2 mm as is the case with DVD-RAMs and the like. Accordingly, recording density per volume can be readily doubled. However, bonding together two optical disks with a same format and a same physical structure makes it difficult to simultaneously record data on or reproduce data from both recording surfaces. This problem will now be described with reference to Fig. 18.

Fig. 18 is a diagram for describing a recording method for a conventional optical disk having two recording surfaces. In Fig. 18, an optical disk 1601 records data. A substrate of the optical disk 1601 has a thickness of 0.6 mm. An optical disk 1602 is created by bonding together two optical disks 1601 and has two recording surfaces. An optical pickup 1603 records data on one recording surface of the optical disk 1602. An optical pickup 1604 records data on the other recording surface of the optical disk 1602. A motor 1605 rotates the optical disk 1602.

The optical disk 1602 has recording surfaces on both sides as a result of bonding together two optical disks 1601 with a same format and a same physical structure. In this manner, by bonding together two of the same optical disks 1601, a manufacturing process of the two optical disks 1601 prior to bonding is shared. Therefore, the optical disk 1602 having recording surfaces on both sides can be manufactured inexpensively.

However, as shown in Fig. 18, directions of spirals of recording tracks are opposite to each other between an upper side and a lower side of the optical disk 1602. Therefore, when the optical disk 1602 is rotated in a certain direction, recording tracks rotate in opposite directions between the upper side and the lower side. As a result, as shown in Fig. 18, even if two optical pickups 1603 and 1604 are provided on both recording surfaces of the optical disk 1602, data cannot be recorded on or reproduced from both recording surfaces at the same time.

With an optical disk structured as described above, in order to record data on or reproduce data from both recording surfaces, an optical pickup is provided only on the side of one of the recording surfaces and the recording surfaces are reversed by removing and inserting the optical disk. Alternatively, the optical pickups 1603 and 1604 are respectively provided on both of the two recording surfaces, and once recording or reproduction of one recording surface ends, a direction of rotation of the motor 1605 is reversed to start recording or reproduction of the other recording surface. If the two optical pickups 1603 and 1604 are capable of recording data on or reproducing data from both recording surfaces at the same time, a recording transfer rate or a reproduction transfer rate can be doubled. However, due to the reasons described above, it is difficult to have the two optical pickups 1603 and 1604 record data on or reproduce data from both recording surfaces at the same time. Therefore, there is a problem that the transfer rate cannot be increased with an optical disk having two recording surfaces.

### Citation List

### Patent Literature

Patent Literature 1: Japanese Patent No. 3059026
Patent Literature 2: Japanese Patent No. 3560410
Patent Literature 3: Japanese Patent No. 4534387
Patent Literature 4: Japanese Patent Application Laid-open No. S61-276168

### Summary of the Invention

The present invention has been made to solve the problems described above, and an object of the present invention is to provide an optical disk recording medium, an optical disk device, and recording method which are capable of increasing recording density.

An optical disk recording medium according to an aspect of the present invention is an optical disk recording medium which records data and which comprises a groove track formed by a groove and a land track formed between adjacent groove tracks, wherein the groove track records address information representing information on a position within a recording surface of the optical disk recording medium by a predetermined pattern due to wobbling of the groove track, an integral multiple of a wobbling period of a portion of the groove track other than the address information is consistent with a length of one circumference of the groove track, an integral multiple of a period of the address information is consistent with the length of one circumference of the groove track, and pieces of information that differ between adjacent groove tracks among the address information are recorded by at least predetermined wobble patterns that differ between the adjacent groove tracks.

According to this configuration, a groove track is formed by a groove and a land track is formed between adjacent groove tracks. The groove track records address information representing information on a position within a recording surface of the optical disk recording medium by a predetermined pattern due to wobbling of the groove track. An integral multiple of a wobbling period of a portion of the groove track other than the address information is consistent with a length of one circumference of the groove track. In addition, an integral multiple of a period of the address information is consistent with the length of one circumference of the groove track. Furthermore, pieces of information that differ between adj acent groove tracks among the address information are recorded by at least predetermined wobble patterns that differ between the adjacent groove tracks.

According to the present invention, since the integral multiple of a wobbling period of a portion of the groove track other than the address information is consistent with a length of one circumference of the groove track and an integral multiple of a period of the address information is consistent with the length of one circumference of the groove track, a width of the land track can be set constant, data can be recorded on both the groove track and the land track, and a recording density of the optical disk recording medium can be increased.

In addition, since pieces of information that differ between adjacent groove tracks among the address information are recorded by at least predetermined wobble patterns that differ between the adjacent groove tracks, address information can be decoded without mutual interference from adjacent groove tracks, and address information can even be decoded from the land track between the adjacent groove tracks.

This and other objects, features, and advantages of the present invention will become more apparent as the following detailed description is read with reference to the accompanying drawings.

### Brief Description of the Drawings

[Fig. 1] Fig. 1 is a diagram for describing a format of an optical disk recording medium according to a first embodiment of the present invention.
[Fig. 2] Fig. 2 is a diagram for describing a data allocation structure of address information according to the first embodiment of the present invention.
[Fig. 3] Fig. 3 is a diagram for describing more desirable allocation conditions of an MSK wobble of adjacent groove tracks.
[Fig. 4] Fig. 4 is a diagram showing a structure of address information constituted by a plurality of address unit bits according to the first embodiment of the present invention.
[Fig. 5] Fig. 5 is a diagram for describing generation of a recording clock according to the present first embodiment.
[Fig. 6] Fig. 6 is a block diagram showing a configuration of an optical disk device according to the first embodiment of the present invention.
[Fig. 7] Fig. 7 is a diagram showing a table which represents a division ratio N that is set for a recording clock PLL circuit of each recording zone and a length 1T that corresponds to a recording line density in each record zone used in the present first embodiment.
[Fig. 8] Fig. 8 is a diagram showing a sequence of start of recording and additional recording of a PCRA that is a continuous area when data is recorded in a zone.
[Fig. 9] Fig. 9 is a diagram showing a sequence of start of recording and additional recording of a PCRA that is a continuous area when data is recorded across a zone boundary.
[Fig. 10] Fig. 10 is a diagram showing a specific example of a PCRA table for managing a PCRA.
[Fig. 11] Fig. 11 is a diagram for describing an alternate recording process when there is a defect on an optical disk recording medium and recording is interrupted.
[Fig. 12] Fig. 12 is a diagram for describing a wobble pattern of an optical disk recording medium according to a second embodiment of the present invention.
[Fig. 13] Fig. 13 is a block diagram for describing a configuration of an optical disk device according to the second embodiment of the present invention.
[Fig. 14] Fig. 14 is a block diagram for describing a configuration of an optical disk device according to a third embodiment of the present invention.
[Fig. 15] Fig. 15 is a diagram showing a configuration of an address reverse-order decoder shown in Fig. 14.
[Fig. 16] Fig. 16 is a diagram for describing a format of a conventional optical disk.
[Fig. 17] Fig. 17 is a diagram for describing a format of another conventional optical disk.
[Fig. 18] Fig. 18 is a diagram for describing a recording method for a conventional optical disk having two recording surfaces.

### Description of Embodiments

Hereinafter, an optical disk recording medium, an optical disk device, and a recording method according to embodiments of the present invention will be described with reference to the drawings. However, it should be noted that the following embodiments are merely embodied examples of the present invention and are not intended to limit the technical scope of the present invention. In addition, like components will be denoted by like reference numerals and repetitive descriptions will be omitted.

### (First embodiment)

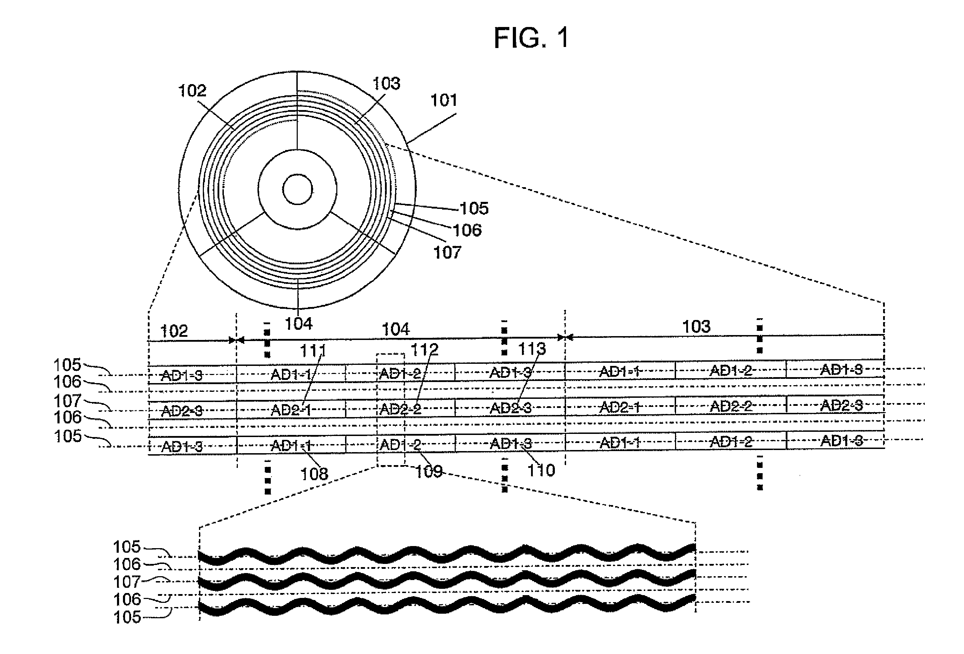

Fig. 1 is a diagram for describing a format of an optical disk recording medium according to a first embodiment of the present invention. In Fig. 1, an optical disk recording medium 101 has recording layers on both sides. Moreover, while only one of the sides of the optical disk recording medium 101 is shown in Fig. 1, the other side shares the same structure. A groove track 105 and a groove track 107 are recording tracks formed by grooves on the optical disk recording medium 101. A land track 106 is a recording track formed by a land on the optical disk recording medium 101. Address groups 102, 103, and 104 are formed by dividing the groove track 105, the land track 106, and the groove track 107 by straight lines that extend radially from a center of the optical disk recording medium 101.

Moreover, although the optical disk recording medium 101 is configured so as to have recording surfaces on both sides according to the present first embodiment, the present invention is not limited thereto and the optical disk recording medium 101 may alternatively have a recording surface on only one side.

The groove track 105 and the groove track 107 are alternately repeated in a radial direction on both sides of the land track 106. The address groups 102, 103, and 104, which are radially divided at three locations, respectively have three independent pieces of address information 108, 109, 110, 111, 112, and 113. The pieces of address information 108, 109, 110, 111, 112, and 113 are recorded by wobbling the groove track 105 and the groove track 107. The three pieces of address information 108, 109, and 110 constitute a single set, and address values of the three pieces of address information 108, 109, and 110 increase sequentially. In a similar manner, the three pieces of address information 111, 112, and 113 constitute a single set, and address values of the three pieces of address information 111, 112, and 113 increase sequentially.

The optical disk recording medium 101 comprises the groove tracks 105 and 107 formed by grooves and the land track 106 formed between adjacent groove tracks. A groove track records address information representing information on a position within a recording surface of the optical disk recording medium 101 by a predetermined pattern due to wobbling of the groove track. Moreover, a groove track may be constituted by a single groove that is spirally formed on the recording surface. Alternatively, a groove track may be constituted by a plurality of grooves that are concentrically formed on the recording surface.

A schematic view of an enlargement of a part of a track is shown at the bottom of Fig. 1. As shown at the bottom of Fig. 1, a feature of the optical disk recording medium 101 according to the present first embodiment is that phases of wobbles are the same between adjacent grooves. In other words, a configuration is adopted in which a length of one circumference of a groove track is an integral multiple of a period of a wobble. Accordingly, a width of the land track 106 that is sandwiched between the groove tracks 105 and 107 does not vary and a constant width can be maintained.

An integral multiple of a wobbling period of a portion of the groove tracks 105 and 107 other than address information is consistent with a length of one circumference of each of the groove tracks 105 and 107. In addition, an integral multiple of a period of the address information is consistent with the length of one circumference of each of the groove tracks 105 and 107.

On the other hand, with a conventional optical disk such as the Blu-ray Disc shown in Fig. 17, since the length of one circumference of a groove track is not consistent with an integral multiple of a wobble period, phases of wobbles of adjacent groove tracks are gradually offset with each recording track. Therefore, while the width of a groove track can be kept constant, the width of a land track varies frequently. In other words, the land track assumes a shape that is unsuitable as a recording track.

Furthermore, with the conventional optical disk recording medium shown in Fig. 18, phases of wobbles of adjacent grooves vary with each groove track. Therefore, a beat occurs in a wobble signal and causes a decline in address reproduction performance or generation performance of a recording clock that is generated by a PLL (Phase Locked Loop) circuit based on a wobble. This phenomenon becomes more prominent when a land is used as a recording track. Since a wall surface of a land is constituted by two adjacent wobbled grooves, a phase of the land varies in a completely asynchronous manner, which makes it impossible to even detect a wobble signal and prevents a recording clock from being generated. As a result, data cannot be recorded on a land track.

With respect to such conventional problems, a structure of an optical disk recording medium that is a first point of the present invention will be described below. With the optical disk recording medium according to the present first embodiment, a beat phenomenon due to a wobble of a land can be resolved by adopting a configuration in which periods of wobbles of adjacent groove tracks are the same across an entire surface of the optical disk recording medium. Accordingly, a stable wobble signal can now be detected even at lands.

Furthermore, with the optical disk recording medium according to the present first embodiment, address information is recorded by modulating a wobble of a groove using different address bit patterns between the groove track 105 and the groove track 107 on either side of the land track 106. Accordingly, address information can even be acquired at the land track 106 that is sandwiched between the groove track 105 and the groove track 107. An address data allocation structure which enables address information to be acquired at a land will be described in detail below.

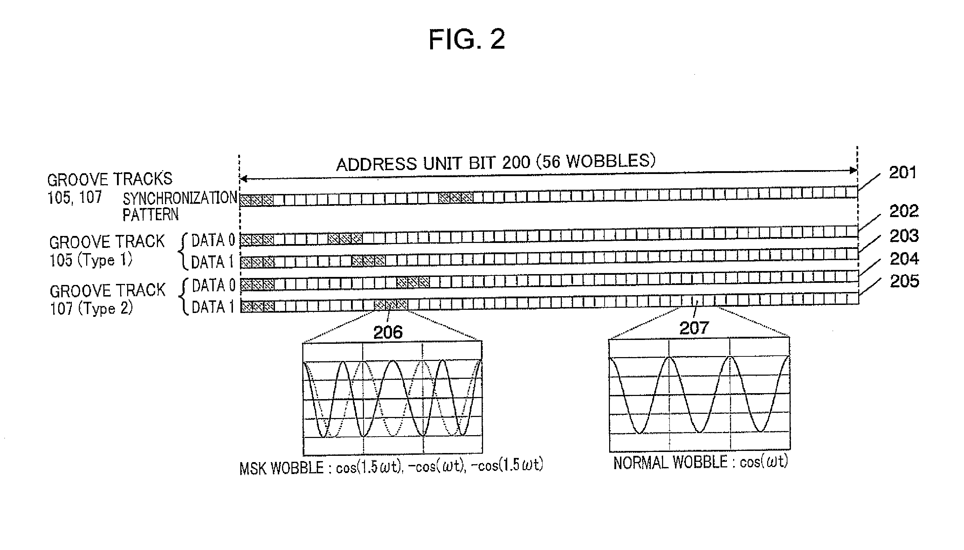

Fig. 2 is a diagram for describing a data allocation structure of address information according to the present first embodiment. In order to record address information, data corresponding to 1 bit of the address information must be recorded on the optical disk recording medium in advance as a wobble variation. A major feature of the optical disk recording medium according to the present first embodiment is that the optical disk recording medium is constituted by two groove tracks 105 and 107 which alternate each other with each circumference and that patterns of data for recording address information are varied between the groove track 105 and the groove track 107.

Pieces of information that potentially differ between the adjacent groove tracks 105 and 107 among the address information are recorded by at least predetermined wobble patterns that differ between the adjacent groove tracks 105 and 107. In addition, information that is constantly common to the adjacent groove tracks 105 and 107 among the address information is recorded by a predetermined wobble pattern that is common to the adjacent groove tracks 105 and 107.

Furthermore, the predetermined wobble pattern for recording pieces of information that differs between the adjacent groove tracks 105 and 107 among the address information includes a wobble pattern that is common to the adjacent groove tracks 105 and 107. The common wobble pattern is allocated so as to have a predetermined central angle in a radial direction of the optical disk recording medium 101. Moreover, the central angle represents an angle between two straight lines that extend from a center point toward an outer edge of the optical disk recording medium 101.

As shown in Fig. 2, 1 bit of address data is constituted by an address unit bit 200 made up of 56 wobbles. In Fig. 2, address data 202 and 203 are pieces of address data with a 1/0 recording format (Type 1) on the groove track 105, and address data 204 and 205 are pieces of address data with a 1/0 recording format (Type 2) on the groove track 107. A special wobble referred to as an MSK wobble 206 (the shaded areas in Fig. 2) in which a shape of a wobble is altered at two locations exists in the address unit bit 200. With the exception of the MSK wobble 206 which has a special wobble pattern, the address unit bit 200 is constituted by wobbles 207 having a nonnal wobble pattern. A plurality of types of 1/0 data can be expressed by varying appearance positions of the MSK wobble 206 which has a special wobble pattern.

A wobble signal of the MSK wobble 206 is expressed by cos(1.5ωt), -cos(ωt), and -cos(1.5ωt), and a wobble signal of the wobble 207 is expressed by cos(ωt).

As shown in Fig. 2, the present first embodiment uses a synchronization pattern 201 which is commonly used by the groove track 105 and the groove track 107 and address data 202, 203,204, and 205 with a 0/1 pattern which correspond to the respective groove tracks 105 and 107. With the patterns of the address data 202, 203, 204, and 205, positions of the MSK wobble 206 differ among the respective patterns. Therefore, the address data 202, 203, 204, and 205 can be demodulated without mutual interference. In other words, since the patterns of the address data 202, 203, 204, and 205 of grooves that are adjacent to a land are constituted by patterns which do not interfere with each other, address data can be demodulated even when the land is traced. This can be achieved by setting the patterns of the address data 202, 203, 204, and 205 in a direction that differs from a track direction.

On the other hand, address information includes pieces of data which differ from each other and pieces of data which are the same between the adjacent groove tracks 105 and 107. For example, the synchronization pattern 201 which is information for identifying a start position of an address is information that is the same between adjacent groove tracks and since a common interference does not occur, a common pattern can be used.

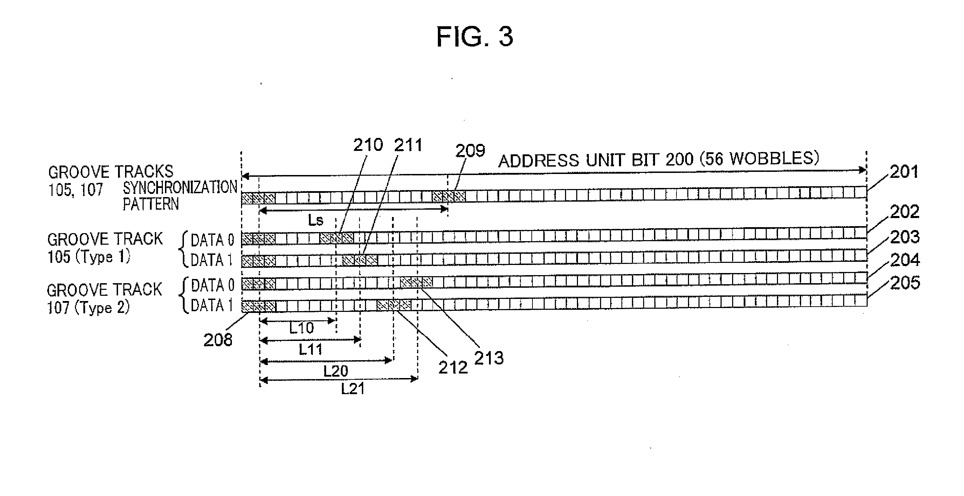

The MSK wobble 206 of the groove track 105 and the groove track 107 configured as shown in Fig. 2 is more desirably allocated as described below. Fig. 3 is a diagram for describing more desirable allocation conditions of the MSK wobble of the adjacent groove tracks 105 and 107.

In Fig. 3, Ls denotes a distance between an MSK wobble 208 that is allocated at a position common to the groove track 105 and the groove track 107 and an MSK wobble 209 that forms a synchronization pattern. L10 denotes a distance from the MSK wobble 208 to an MSK wobble 210 which represents address data "0" of the groove track 105. L11 denotes a distance from the MSK wobble 208 to an MSK wobble 211 which represents address data "1" of the groove track 105. L20 denotes a distance from the MSK wobble 208 to an MSK wobble 212 which represents address data "1" of the groove track 107. L21 denotes a distance from the MSK wobble 208 to an MSK wobble 213 which represents address data "0" of the groove track 107.

|L10 - L11| and |L20 - L211 which are absolute values of differences in distances between MSK wobbles in a same groove track are differences that are necessary for determining address data 0/1 in the same groove track. The greater the absolute value of a difference in distances between MSK wobbles, the easier address data 0/1 can be determined.

Meanwhile, with the optical disk recording medium according to the present first embodiment, address data of the groove track 105 and the groove track 107 must also be read out at an adjacent land track. At a land track, since an optical beam does not pass above MSK wobbles, a resolution of the optical beam declines and interference by MSK wobbles between the groove track 105 and the groove track 107 increases.

As a result, in order to avoid the influence of interference, an absolute value |L11 - L20| representing a minimum difference in distances between the groove track 105 and the groove track 107 favorably satisfies |L10 - L11| < [L11 - L20| and |L20 - L21| < |L11 - L20|. Accordingly, address information can be detected at a land track in a more stable manner.

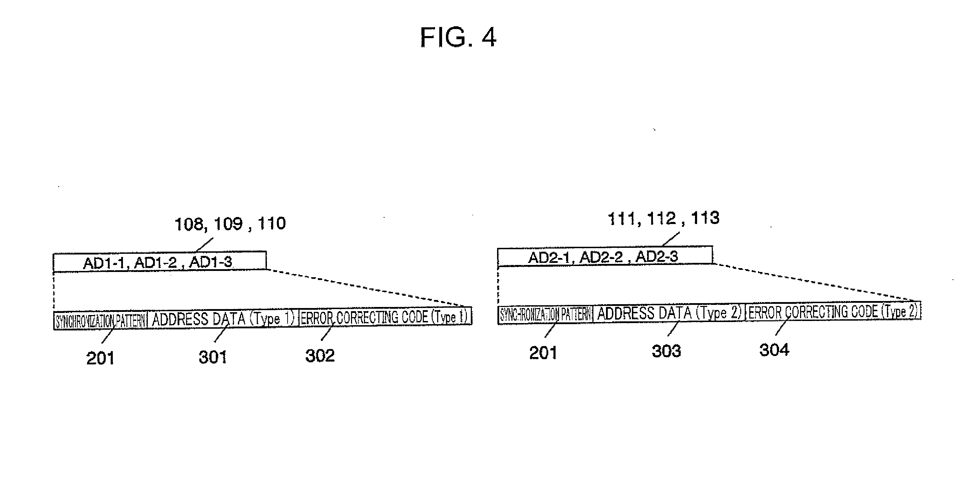

Fig. 4 is a diagram showing a structure of address information 108, 109, 110, 111, 112, and 113 constituted by a plurality of address unit bits 200 according to the first embodiment of the present invention.

In Fig. 4, since the synchronization pattern 201 is data that is common to the adjacent groove tracks 105 and 107, a common pattern is used. While a single synchronization pattern 201 is used in the present first embodiment, reliability of synchronization can be increased by using a plurality of synchronization patterns. In addition, while one type of synchronization pattern is used in the present first embodiment, a pattern in which a position of the MSK wobble 206 differs can be used in combination with the synchronization pattern. In this case, since the synchronization pattern is common to the adjacent groove tracks 105 and 107, individual synchronization patterns need not be respectively prepared for the groove track 105 and the groove track 107. As described above, by using a common wobble pattern for data that is common between adjacent groove tracks, the number of necessary wobble patterns can be reduced.

In Fig. 4, address data 301 is address data used for the groove track 105 and an error correcting code 302 is an error correcting code that is added in order to correct errors in the address data 301. The address data 301 and the error correcting code 302 both use the Type 1 recording format. In addition, in Fig. 4, address data 303 is address data used for the groove track 107 and an error correcting code 304 is an error correcting code that is added in order to correct errors in the address data 303. The address data 303 and the error correcting code 304 both use the Type 2 recording format.

When data is recorded on an optical disk recording medium configured as described above, special measures must be taken to maintain recording density approximately constant within a recording surface of the optical disk recording medium. This uniformity of recording density in a recording surface that is a second point of the present invention will be described in detail below.

With a conventional optical disk device, data is recorded in accordance with address information provided on an optical disk recording medium. Therefore, if data is recorded on the optical disk recording medium 101 according to the present first embodiment at a recording density that is proportional to a wobble period in a similar manner to a conventional optical disk device, a significant difference in recording line density ends up being created between an outer circumference and an inner circumference. This is attributable to address areas of the optical disk recording medium 101 according to the present first embodiment being radially allocated on the recording surface of the optical disk recording medium, and recording line density declines significantly on the outer circumference of the optical disk recording medium. However, if the address areas (the address groups 102, 103, and 104) are not radially allocated, an interference of wobbles occurs between a land and a groove as described earlier and, as a result, only groove tracks are usable as recording tracks.

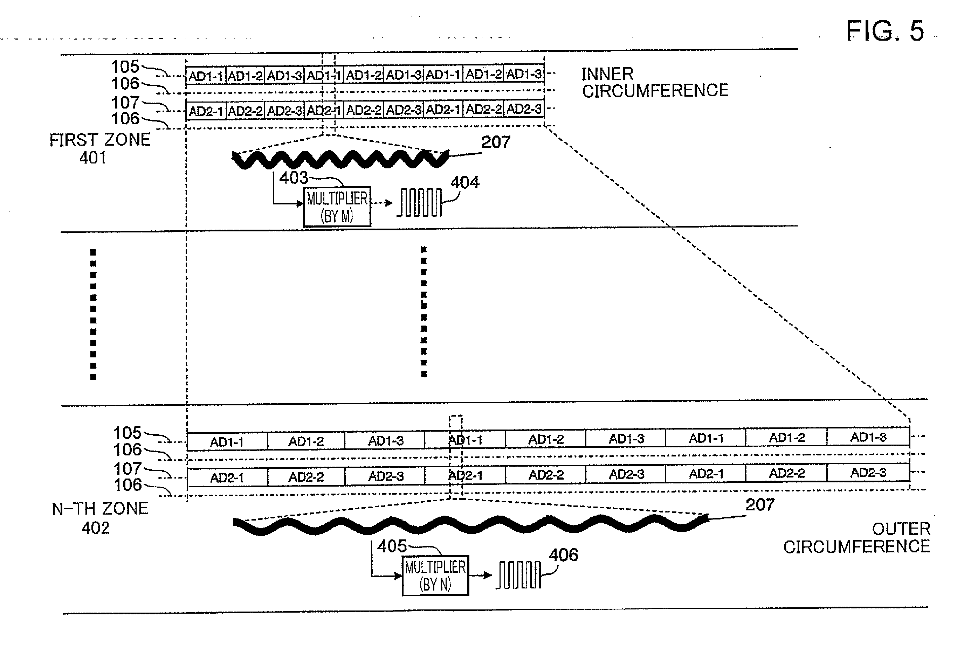

An optical disk device according to the present first embodiment resolves the problem described above by dividing the recording surface of the optical disk recording medium 101 into a plurality of zones in a radial direction and managing recording as shown in Fig. 5. Fig. 5 is a diagram for describing generation of a recording clock according to the present first embodiment. In Fig. 5, an optical disk recording medium is divided into N-number of zones in a radial direction, wherein a first zone 401 is an inner circumferential zone and an N-th zone 402 is an outer circumferential zone. A multiplier 403 multiplies a wobble period in the inner circumferential first zone 401 by a factor of M to generate a recording clock 404. A multiplier 405 multiplies a wobble period in the outer circumferential N-th zone 402 by a factor of N to generate a recording clock 406.

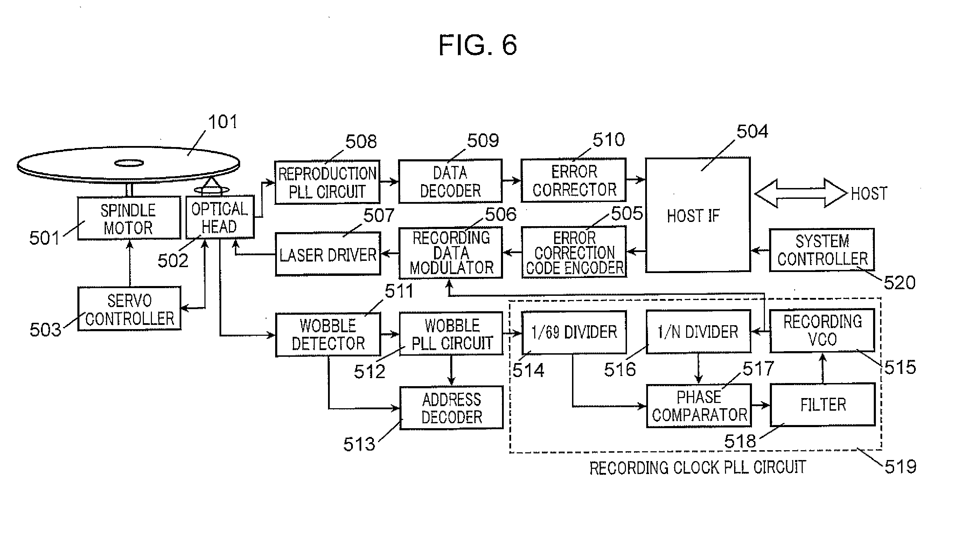

As described above, by generating a recording clock with a predetermined magnification in accordance with a radius ratio of the optical disk recording medium from a wobble signal using a recording clock PLL circuit, a recording clock which sets recording line density approximately constant in each zone can be generated. In addition, by having data recorded based on the generated recording clock, the recording density in a recording surface of the optical disk recording medium can be maintained approximately constant. The optical disk device according to the present first embodiment is capable of maintaining recording density approximately constant from the inner circumference to the outer circumference by dividing the optical disk recording medium 101 into a plurality of zones even when the optical disk recording medium 101 is structured such that wobbles and addresses are radially allocated. A configuration of an optical disk device according to the present first embodiment is shown in Fig. 6.

Fig. 6 is a block diagram showing a configuration of the optical disk device according to the first embodiment of the present invention. Operations of the optical disk device according to the present first embodiment will be described with reference to Fig. 6. In Fig. 6, the optical disk device comprises a spindle motor 501, an optical head 502, a servo controller 503, a host interface (I/F) 504, an error correction code encoder 505, a recording data modulator 506, a laser driver 507, a reproduction PLL circuit 508, a data decoder 509, an error corrector 510, a wobble detector 511, a wobble PLL circuit 512, an address decoder 513, a 1/69 divider 514, a recording VCO (voltage-controlled oscillator) 515, a 1/N divider 516, a phase comparator 517, a filter 518, and a system controller 520. In addition, a recording clock PLL circuit 519 comprises the 1/69 divider 514, the recording VCO 515, the 1/N divider 516, the phase comparator 517 and the filter 518.

The spindle motor 501 rotates the optical disk recording medium 101. The optical head 502 records data on the optical disk recording medium 101 and reproduces data from the optical disk recording medium 101. The servo controller 503 controls the optical head 502 and the spindle motor 501, and performs control so that an optical beam irradiated from the optical head 502 accurately scans a recording track or a reproducing track and accesses a target track. The host interface 504 receives recording data to be recorded on the optical disk recording medium 101 from a host and sends reproduced data that is reproduced from the optical disk recording medium 101 to the host.

The error correction code encoder 505 adds a parity for error correction to the recording data received from the host interface 504. The recording data modulator 506 modulates the recording data from the error correction code encoder 505 and converts the recording data into a pattern that can be recorded on the optical disk recording medium 101. The laser driver 507 converts the recording data modulated by the recording data modulator 506 into an optical pulse for accurately forming a mark on the optical disk recording medium 101 and drives a laser light source included in the optical head 502.

The reproduction PLL circuit 508 extracts a synchronizing clock for demodulating a reproduction signal from the optical disk recording medium 101. The data decoder 509 demodulates the recorded data from the reproduction signal. The error corrector 510 performs error correction on the demodulated data and restores the demodulated data.

The wobble detector 511 filters and extracts a wobble signal from the optical disk recording medium 101. The wobble detector 511 detects the wobble signal from the optical disk recording medium 101. The wobble PLL circuit 512 generates a clock that is synchronized with the wobble signal detected by the wobble detector 511. The address decoder 513 decodes address information from the wobble signal detected by the wobble detector 511.

The recording clock PLL circuit 519 generates a clock that is an integral multiple of the wobble signal. The 1/69 divider 514 divides the clock generated by the wobble PLL circuit 512 by 69. The recording VCO 515 oscillates the recording clock. The 1/N divider 516 divides the clock from the recording VCO by N. The phase comparator 517 compares phases of the two clocks. The filter 518 filters output from the phase comparator 517 and stabilizes control characteristics. The system controller 520 controls the respective blocks and controls communication with the host.

The system controller 520 controls the respective parts of the optical disk device so that data is recorded based on the clock generated by the recording clock PLL circuit 519. The recording data modulator 506, the laser driver 507, and the optical head 502 record data based on the clock generated by the recording clock PLL circuit 519.

First, a recording operation of the optical disk device according to the present first embodiment will be described. The host interface 504 acquires recording data transmitted from a host. The error correction code encoder 505 adds an error correcting code for correcting an error during reproduction to recording data transferred via the host interface 504. The recording data modulator 506 modulates the error correcting code-added data to a pattern suitable for recording on the optical disk recording medium 101. In the present first embodiment, the recording data modulator 506 modulates recording data using a 1-7 PP code that is a run-length limited code. According to the 1-7 PP code, the laser driver 507 converts recording data modulated from 2T to a 9T recording mark and space into a castle-shape pulse waveform in order to accurately form a recording mark on the optical disk recording medium 101, and outputs a drive signal for driving the laser light source to the optical head 502. The optical head 502 records the recording data by irradiating a laser pulse on the optical disk recording medium 101.

The optical disk recording medium 101 according to the present first embodiment is structured such that addresses are added radially. Therefore, a clock for recording data must be controlled so that a recording line density within a surface of the optical disk recording medium 101 becomes approximately constant. The recording clock PLL circuit 519 controls the recording clock. The wobble detector 511 detects the wobble signal recorded on the optical disk recording medium 101. Based on the wobble signal detected by the wobble detector 511, the wobble PLL circuit 512 generates a clock that is synchronized with a clock that is 69 times a wobble clock. The 1/69 divider 514 divides the clock generated by the wobble PLL circuit 512 by 69. Accordingly, a clock that is synchronized with the wobble clock is generated.

Meanwhile, the recording VCO 515 generates a clock for recording data. The 1/N divider 516 divides the clock generated by the recording VCO 515 by N. The phase comparator 517 compares a phase of the clock divided by the 1/N divider 516 with a phase of the clock synchronized with the wobble clock divided by the 1/69 divider 514. The filter 518 filters output from the phase comparator 517 so that desired control characteristics are obtained and provides the recording VCO 515 with feedback. Due to the series of operations by the recording clock PLL circuit 519, the recording VCO 515 generates a recording clock that is N times a wobble frequency on the optical disk recording medium 101.

The recording surface of the optical disk recording medium 101 is divided into a plurality of zones in the radial direction. A recording frequency or a recording rate is altered in each of the plurality of zones. At the start position of each of the plurality of zones, the system controller 520 conforms a record start position of recording data that is recorded on the optical disk recording medium 101 to a boundary of address information.

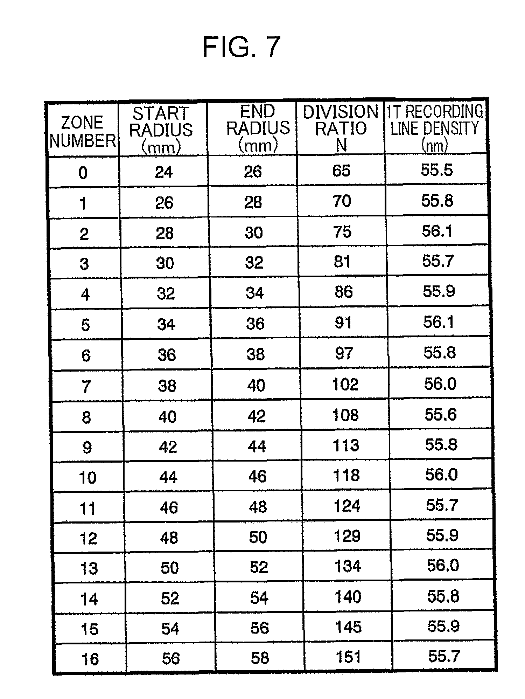

Fig. 7 is a diagram showing a table which represents a division ratio N that is set for a recording clock PLL circuit of each recording zone and a length 1T that corresponds to a recording line density in each record zone used in the present first embodiment. As shown in the table in Fig. 7, in the present first embodiment, zone management during recording is performed by dividing a radius range of 24 mm to 58 mm of the optical disk recording medium 101 into 17 zones. In the present first embodiment, the number of wobbles in one circumference of the track of the optical disk recording medium 101 is assumed to be 41,832. In addition, as shown in Fig. 1, 18 pieces of address information constituted by the three address groups 102, 103, and 104 are recorded in one circumference of the track. As is also apparent from Fig. 7, due to the optical disk recording medium 101 being configured as described above, a length of 1T in the respective zones becomes approximately uniform, and recording at an approximately uniform recording line density in a surface of the optical disk recording medium 101 can be achieved even when the optical disk recording medium 101 is structured so as to have radially allocated wobbles.

However, with an optical disk device configured as described above, despite the length of an area constituting an address becoming longer from the inner circumference toward the outer circumference, the recording line density of data to be recorded is set approximately uniform within the surface of the optical disk recording medium 101. Therefore, a new problem arises in that a length of an area constituted by a single piece of address information 108, 109, 110, 111, 112, or 113 is not consistent with a length of a recording data area and, furthermore, a relationship between an area of address information and an area of recording data varies within a surface of the optical disk recording medium 101.

With a conventional optical disk device, the length of an area managed by an address and a length of an area in which data is recorded are consistent, and there is a one-to-one correspondence between a management unit of recording data and a management unit of addresses. However, with the optical disk device according to the present first embodiment, since recording density is improved by having recording performed on both grooves and lands, the conventional relationship between an address area and a recording data area is not satisfied. In order to resolve this problem, the optical disk device according to the present first embodiment introduces a non-conventional concept to the relationship between an address area and a recording data area. A management method of address information and a recording data area that is a third important point of the present invention will be described in detail below.

In order to resolve the problem described above, the optical disk device according to the present first embodiment introduces a concept referred to as a physical continuous recording area (hereinafter, abbreviated as PCRA). The PCRA can be allocated at any position on the optical disk recording medium 101 and is managed in the present first embodiment by the system controller 520 according to rules (1) to (3) below.
(1) A PCRA start position is consistent with an address boundary on the optical disk recording medium 101.
(2) Data recorded in a PCRA includes address information that differs from an address allocated in advance on the optical disk recording medium 101.
(3) A PCRA does not straddle a boundary of a zone where a recording clock varies.

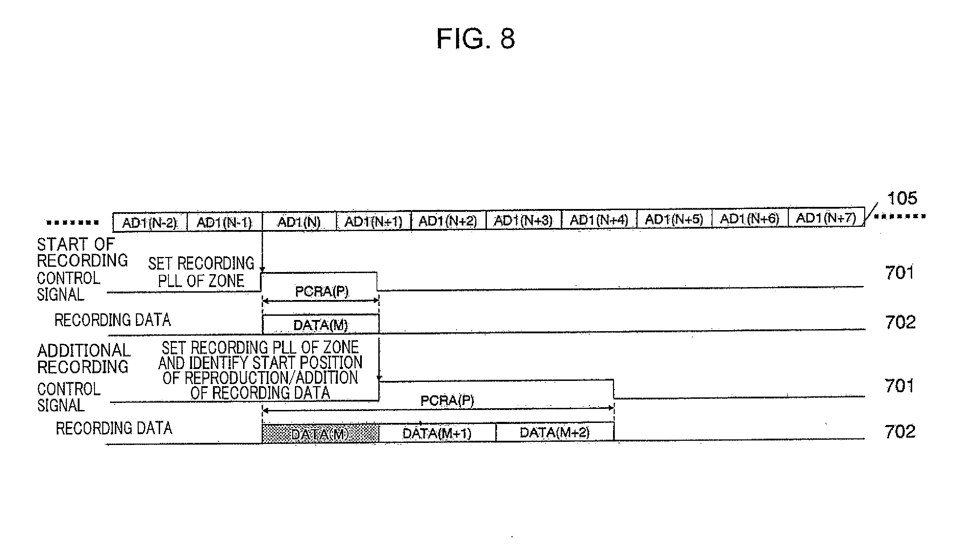

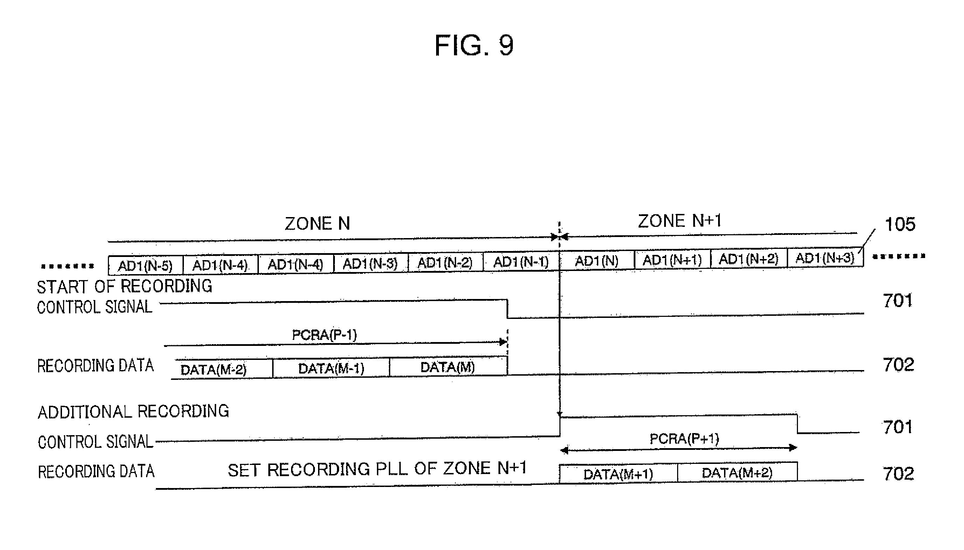

Hereinafter, a relationship between a PCRA and a PCRA management table for managing addresses on an optical disk recording medium, recording data, and a PCRA will be described based on specific examples and with reference to Figs. 8 and 9. In Figs. 8 and 9, recording is represented by an H level of a control signal 701 for recording or reproduction. Recording data 702 is recording data recorded on a track.

Fig. 8 is a diagram showing a sequence of start of recording and additional recording of a PCRA that is a continuous area when data is recorded in a zone. Since recording must be started in an unrecorded portion of a PCRA, a recording start position of a PCRA is consistent with a boundary of address information 108, 109, 110, 111, 112, or 113. In other words, a recording start position of recording data that is recorded on the optical disk recording medium 101 is consistent with a boundary of address information.

In the example shown in Fig. 8, recording is started at anN-th address (AD1(N)) of address information AD1. A seek to this position is performed using the address information. In N-1-th and previous address areas, the recording clock PLL circuit 519 is set in accordance with set values of the table shown in Fig. 7 along a current zone and PLL of the recording clock PLL circuit 519 is locked by a wobble signal. Subsequently, a predetermined recording start address (in the present first embodiment, AD1(N)) is identified from the address information and recording is started. In the example shown in Fig. 8, DATA(M) (where M denotes a data address in the recording data) is recorded.

Data is added to this area in an additional recording mode. A start position of data to be added can be decided based on data address information that is separately recorded in the recording data of a PCRA. With a conventional optical disk recording medium, a recording start position is decided based on address information that is recorded by a wobble formed in advance on the optical disk recording medium. However, with the optical disk device according to the present first embodiment, since a length of address information differs from a length of data to be recorded, a recording start position of data cannot be identified from address information. In order to resolve this problem, with the optical disk device according to the present first embodiment, data to be recorded is managed in a continuous recording area that is referred to as a PCRA, a recording start position is decided based on address information when data is first recorded in the PCRA, and an additional recording start position is decided based on data address information of the recorded data when data is additionally recorded in the PCRA. Accordingly, data can be recorded even if the length of an address area differs from the length of a data area.

In an additional recording process to a PRCA, data address information in the recording data must be demodulated from data that is recorded in a data area of an area in which additional recording is to be performed. Recording data is demodulated by the data decoder 509 based on a synchronizing clock extracted by the reproduction PLL circuit 508 from a reproduction signal from the optical head 502. Accordingly, a timing signal (R/W signals in Figs. 8 and 9 (control signals 701)) for starting recording is created. In order to reproduce an area in which data has been recorded, the area in which data has been recorded must be accessed. However, since data address information is separately added in data that is recorded, by accessing from an already-recorded area based on the data address information, data can be easily reproduced from an area in which data has been recorded.

In the present first embodiment, in order to record data on an optical disk recording medium while keeping recording line density as constant as possible, the optical disk recording medium must be divided into a plurality of zones as shown in Fig. 7 and the recording clock must be altered for each zone. Continuity of the recording area is interrupted at boundaries between the zones. Therefore, a special interruption process is required at the zone boundaries as shown in Fig. 9.

Fig. 9 is a diagram showing a sequence of start of recording and additional recording of a PCRA that is a continuous area when data is recorded across a zone boundary. A zone boundary can be easily calculated based on the number of pieces of recording data which can be recorded in a zone. Therefore, an end position of a zone can be easily calculated from a start position of the zone, a data address of a first piece of recording data that is recorded in the zone, and the number of pieces of data that can be recorded.

In the case shown in Fig. 9, the data address of the last piece of data in zone N is "M", and recording is temporarily interrupted at this data address. In addition, based on the address information on the optical disk recording medium, the area in which the interrupted data is recorded is once again accessed and recording is resumed from AD1(N) which is an address boundary next to the interrupted address. During access for additional recording, despite the optical head 502 being at a position in zone N, the recording clock PLL circuit 519 can be set and the PLL of the recording clock PLL circuit 519 can be locked for recording of data in zone N+1. This is because only logical boundaries exist and there are no physical boundaries among the zone boundaries of the optical disk recording medium 101. This feature of the present first embodiment enables recording to be resumed when a transition is made from zone N to zone N+1 even if a buffer area does not exist at a boundary between adjacent zones. As shown in Fig. 9, recording of data in zone N+1 can be started from an address AD 1 (N) next to an end address AD1(N-1) of zone N.

As described above, the optical disk device according to the present first embodiment does not require a zone boundary buffer area which is a requisite for a conventional DVD-RAM or the like and enables format use efficiency to be improved.

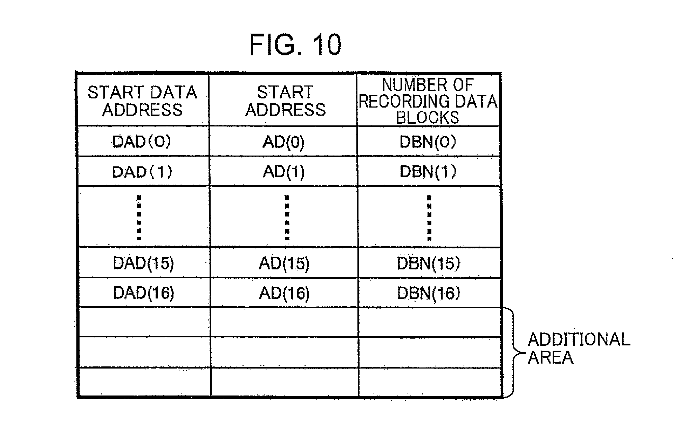

As shown, by defining a continuous recording area referred to as a PCRA, an optical disk device can be provided which is capable of recording or reproducing data even if a size of address information and a size of a recording data area differ from one another. Specifically, in order to manage PCRAs, a PRCA table for managing PCRAs is necessary. Management information (the PCRA table) which associates a start address of a continuous area recorded on the optical disk recording medium 101 and an address included in recording data with each other is recorded in a predetermined area of the optical disk recording medium 101. Fig. 10 is a diagram showing a specific example of a PRCA table for managing PCRAs.

A PRCA table is a table which associates a data address in recording data (start data address) and an address of a start position of a PCRA (start address) with each other and is recorded in a predetermined area of an optical disk recording medium. Upon the start of recording of data on or reproduction of data from the optical disk recording medium, the data can be recorded or reproduced when the PRCA table is read from the predetermined area. Although physical boundaries do not exist on the optical disk recording medium according to the present first embodiment, change points of a recording clock that is used for recording exist as shown in Fig. 7. In the example shown in Fig. 7, the change points of the recording clock correspond to boundaries of 17 divided zones. In the present first embodiment, as described earlier, since an interruption of continuous recording occurs at the zone boundaries shown in Fig. 7 even in a state where recording has not been started, the PCRA table reflects a zone structure upon start of recording on the optical disk recording medium.

When recording data on the optical disk recording medium 101, the system controller 520 records management information (the PCRA table) which associates a start address of a continuous area recorded on the optical disk recording medium 101 and an address included in the recording data with each other. The system controller 520 records the management information (the PCRA table) at a predetermined position on the optical disk recording medium 101.

Moreover, the PCRA table may be recorded in a predetermined area of the optical disk recording medium upon start of recording (during a formatting operation) on the optical disk recording medium or may be recorded in advance by a manufacturer of the optical disk recording medium as physical information such as a recording pit.

The PCRA table shown in Fig. 10 is constituted by a start data address of a continuous area, a start address on the optical disk recording medium, and the number of recording data blocks in the continuous area. By combining the PCRA table, a start data address of a logical area that is recorded on the optical disk recording medium, and the number of recording data blocks, a data address at which recording or reproduction is to be performed and an address on the optical disk recording medium can be calculated.

In addition, in an increment recording mode in which a new continuous recording area on an optical disk recording medium is defined by a conventional optical disk recording medium, recording is started after a continuous recording area is set on the optical disk recording medium. Therefore, by adding a continuous recording area to the PCRA table, a recording mode which is compatible with a conventional optical disk recording medium can be easily realized. In this manner, by using the concept of a PCRA and a PCRA table, the optical disk device and the optical disk recording medium according to the present first embodiment are capable of providing an optical disk device which can be randomly accessed in the same way as a conventional optical disk device, increasing track density in comparison to a conventional optical disk device, and improving format use efficiency.

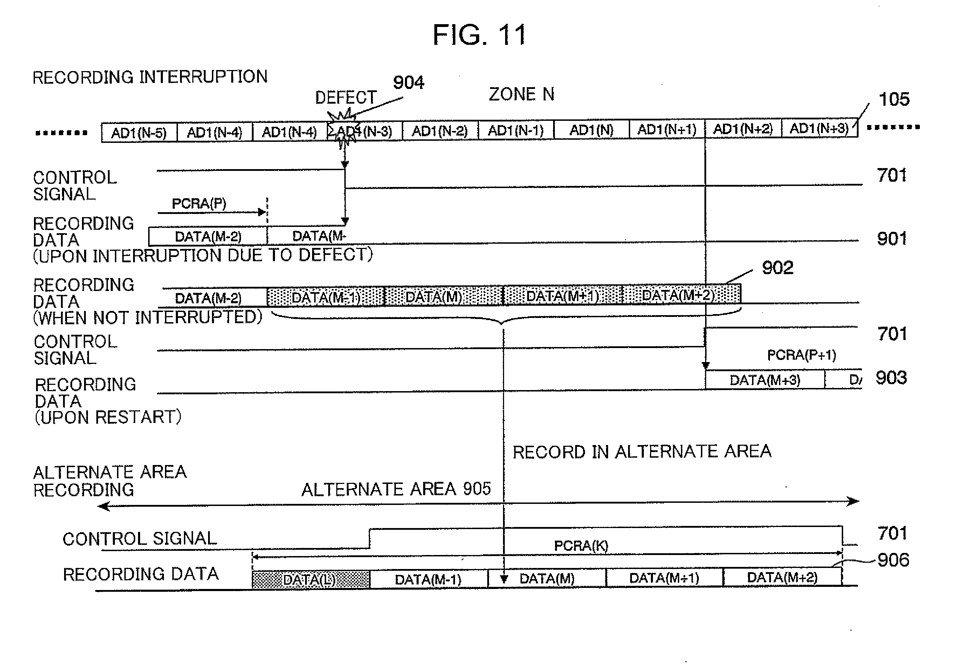

With a conventional optical disk device, an alternate area is secured as a reserve recording area so that data can be recorded without incident even when there is a scratch or a fingerprint on the optical disk recording medium. The optical disk device has an alternate recording function which records data to be recorded in a defective area in the alternate area. The alternate recording function is a function which is also effective against physical defects during manufacture of the optical disk recording medium and which is essential for realizing a highly-reliable optical disk device. However, in order to realize the alternate recording function with the optical disk device according to the present first embodiment, new and unconventional measures must be taken. This problem arises because the length of an address area and the length of a data recording area on the optical disk recording medium are not consistent and the address area and the data recording area do not have a one-to-one correspondence. An alternation process that is a fourth point of the present invention will be described with reference to Fig. 11.

Fig. 11 is a diagram for describing an alternate recording process when there is a defect on an optical disk recording medium and recording is interrupted. As shown in Fig. 11, when there is a defect 904 in an N-3-th address (AD1 (N-3)) and recording is interrupted, recording has been completed up to an M-2-th piece of recording data 901 (DATA(M-2)), and recording data up to the M-2-th piece of recording data 901 is managed as a P-th PCRA (PCRA (P)). M-1-th to M+2-th pieces of recording data 902 to be recorded in a defect area is additionally recorded in an alternate area 905. Subsequently, recording of the recording data 903 is resumed from an N+2-th address (AD1 (N+2)) by avoiding the defect area. At this point, since recording is being temporarily interrupted, management information of a P+1-th PCRA (PCRA (P+1)) is registered in the PCRA table shown in Fig. 10.

Since a start of recording in a PCRA is consistent with an address boundary of the optical disk recording medium, a loss is created in the recording area by the interruption of recording. Therefore, a problem arises in that a size of recordable user data decreases. In order to tackle this problem, as shown in Fig. 11, when a defect occurs, the optical disk device according to the present first embodiment increases data to be recorded in an alternate area to a size that is greater than a size of an area from interruption to restart of recording.

In other words, when a defect area having a defect exists on the optical disk recording medium and recording is interrupted by the defect area, the optical disk device performs an alternation process in which data to be recorded in the defect area is recorded in an alternate area. A size of recording data 906 that is recorded in the alternate area of the optical disk recording medium used for the alternation process is greater than a size of an area from interruption to restart of recording.

If a data area is replaced that is greater than a sum of a size of an area in which a defect has occurred and which requires alternation and a recording interruption segment that is necessary until a next address boundary due to the interruption of recording, a decline in recording capacity of a zone can be prevented. This corresponds to the fact that a size of an alternate area for which an alternation process is performed due to an interruption of recording is greater than a size of an area between the interruption and restart of recording.

Accordingly, after recording is interrupted, a decline in data recording capacity can be prevented when recording is resumed from an address boundary.

As described above, the optical disk recording medium and the optical disk device according to the present first embodiment is capable of increasing track density by recording data using both a land track and a groove track and resolving conventional problems that had caused a decline in format use efficiency to achieve high-density recording at extremely high format use efficiency.

### (Second embodiment)

While a second embodiment of the present invention has basic functions for recording or reproducing data that is similar to those of the first embodiment, the second embodiment is capable of further improving recording reliability of the first embodiment. Since the optical disk recording medium used in the first embodiment has address groups 102, 103, and 104 radially allocated in a radial direction, the number of pieces of address information in one track circumference is the same between an inner circumference and an outer circumference of the optical disk recording medium. For example, the number of pieces of address information in the first embodiment is nine. However, the further towards the outer circumference of the optical disk recording medium, the larger the data areas in which recording is to be performed. This means that address information with respect to data amount is reduced in an outer circumferential portion of the optical disk recording medium in comparison to an inner circumferential portion.

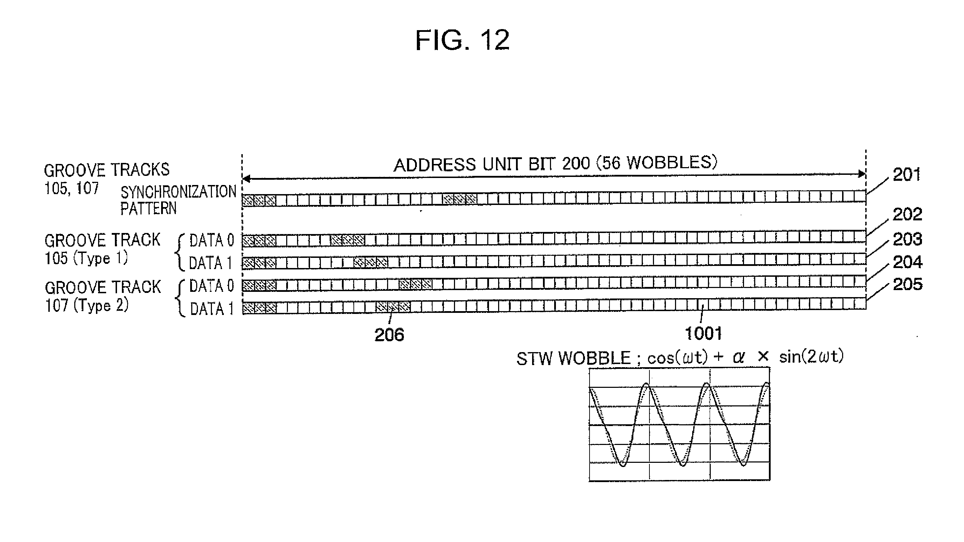

In an optical disk device, the address groups 102, 103, and 104 are not only responsible for identifying a recording position on the optical disk recording medium but are also responsible for interrupting recording using continuity of address information when tracing of a track fails due to a scratch or the like and an optical beam moves to another track during recording. In other words, in the first embodiment, an ability to detect a breakdown in tracking control of an optical beam is reduced in the outer circumferential portion of the optical disk recording medium. With respect to this problem, an optical disk recording medium that is a fifth point of the present invention will be described as the second embodiment with reference to Fig. 12.

Fig. 12 is a diagram for describing a wobble pattern of an optical disk recording medium according to the second embodiment of the present invention. Since the optical disk recording medium used in the second embodiment is similar in shape, address information allocation, and the like to that of the first embodiment, a description will be omitted.

A feature of the optical disk recording medium according to the second embodiment is a wobble pattern of groove tracks 105 and 107. A wobble pattern of an MSK wobble 206 shown in Fig. 12 is similar to the wobble pattern of the MSK wobble 206 shown in Fig. 2. While the wobbles 207 other than the MSK wobble 206 in the first embodiment are monotone wobbles whose wobble signal is expressed by cos(ωt), STW (Saw Tooth Wobble) wobbles 1001 other than the MSK wobble 206 in the second embodiment have an STW pattern as shown in Fig. 12.

A wobble signal of an STW wobble 1001 is expressed as cos(ωt) + α x sin(2ωt). A zero-cross point of the wobble signal of the STW wobble 1001 is the same as cos(ωt). Therefore, even if the wobble pattern of the wobble 207 is replaced with the wobble pattern of the STW wobble 1001, detection of a zero-cross point of a wobble signal according to the first embodiment does not vary and generation of a recording clock from a wobble is not affected.

However, when a value of a coefficient α is varied between adjacent groove tracks, a width of a land track that is sandwiched between the adjacent groove tracks varies subtly. Once the value of the coefficient α exceeds 0.3, a fluctuation in land track width has an effect on a reproduction signal. Therefore, in the present second embodiment, the coefficient α is set so that a maximum value thereof does not exceed 0.3. In the second embodiment, the value of the coefficient α of a second harmonic wave of the STW wobble 1001 is varied in eight ways, namely, -0.28, -0.20, -0.12, -0.04, 0.04, 0.12, 0.20, and 0.28. The wobble patterns that are varied in eight ways correspond to periods of eight groove tracks. This represents setting the coefficient α so that a difference in values of the coefficient α between the eight groove tracks is uniform within a range where the value of the coefficient α does not exceed 0.3.

In other words, a wobble signal corresponding to wobbling in a portion other than address information is expressed as cos(ωt) + α × sin(2ωt). In addition, values of the coefficient α differ between two or more groove tracks. Furthermore, the value of the coefficient α is equal to or smaller than approximately 0.3. Moreover, the value of the coefficient α is more favorably equal to or larger than -0.3 and equal to or smaller than 0.3.

Accordingly, as long as within the range of the eight groove tracks, a trace failure of a groove track and a movement to another track can be detected by detecting a value of the coefficient α from a wobble signal.

With the optical disk recording medium according to the present first embodiment, phases of wobbles are consistent between adjacent groove tracks. Therefore, there is a problem in that when an optical beam erroneously moves to another groove track due to a scratch or the like on the optical disk recording medium, the movement to the other groove track cannot be detected based on phases of wobble signals. However, this problem can be resolved by the present second embodiment.

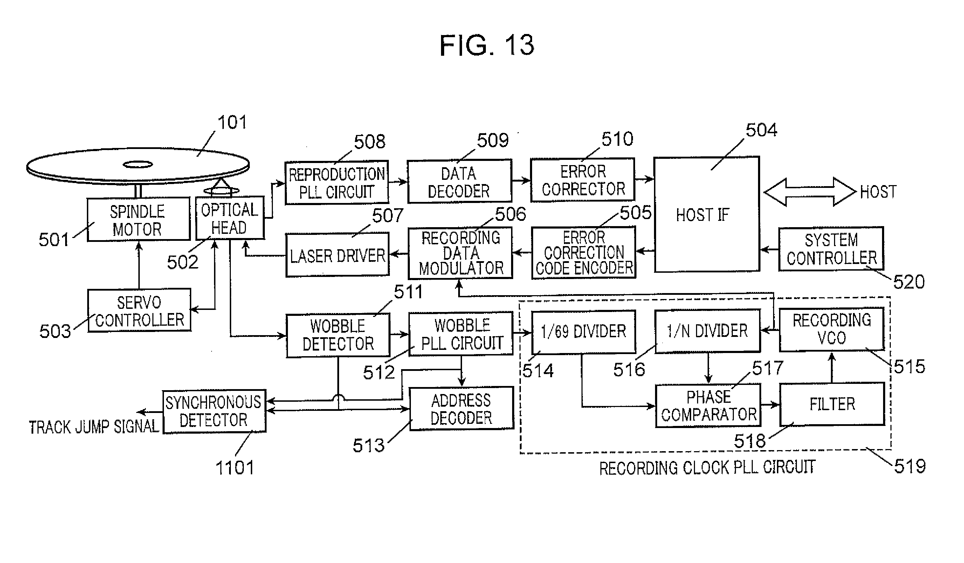

Fig. 13 is a block diagram showing a configuration of an optical disk device according to the second embodiment of the present invention. While a majority of the configuration of the optical disk device shown in Fig. 13 is similar to that of the first embodiment, the optical disk device shown in Fig. 13 further comprises a synchronous detector 1101.

By synchronously detecting a wobble signal based on a clock synchronized with the wobble signal, the synchronous detector 1101 is capable of detecting a second harmonic component of an STW wobble and determining a track jump. In other words, the synchronous detector 1101 detects a coefficient value (the coefficient α) of a sin(2ωt) component that is included in a wobble signal that corresponds to wobbling in a portion other than address information. The system controller 520 determines whether or not a tracking offset has occurred based on the coefficient value detected by the synchronous detector 1101, and when it is determined that a tracking offset has occurred, the system controller 520 interrupts a recording operation. For example, when the value of the coefficient α detected by the synchronous detector 1101 has varied, the system controller 520 determines that a tracking offset has occurred and interrupts the recording operation. With a conventional optical disk device, a track jump is detected based on address information. However, in the second embodiment of the present invention, a track jump can be detected with approximately 200 wobbles and conventional detection performances with respect to a track jump can be significantly improved.

Accordingly, since an abnormal recording upon an occurrence of a track jump can be stopped within a length range that can be corrected by the error corrector 510, an extremely highly reliable optical disk device can be realized in which an occurrence of a track jump does not result in an error.

Moreover, while the coefficient α takes values of -0.28, -0.20, -0.12, -0.04, 0.04, 0.12, 0.20, and 0.28 in the present second embodiment, the value of the coefficient α may be set to values equal to or smaller than approximately 0.3 which do not affect a reproduction signal of a land track and which is approximately evenly assigned to the number of tracks (eight in the present second embodiment) for which track jump is to be detected, in which case a similar effect to that described above can be obtained.

### (Third embodiment)

As described earlier, there is a conventional problem in that when recording data on or reproducing data from an optical disk recording medium having recording surfaces on both sides as shown in Fig. 18, it is difficult to simultaneously record data on or reproduce data from both recording surfaces even when using an optical disk device that is equipped with an optical head for each of both recording surfaces.

With respect to this problem, an optical disk device according to a present third embodiment is capable of simultaneously recording data on or reproducing data from both recording surfaces of an optical disk recording medium that is constructed by simply bonding together two optical disk recording media having a same structure. This is achieved only by an optical disk device according to the present third embodiment which is capable of recording data or reproducing data even if address information and recording data on the optical disk recording medium do not have a one-to-one correspondence.

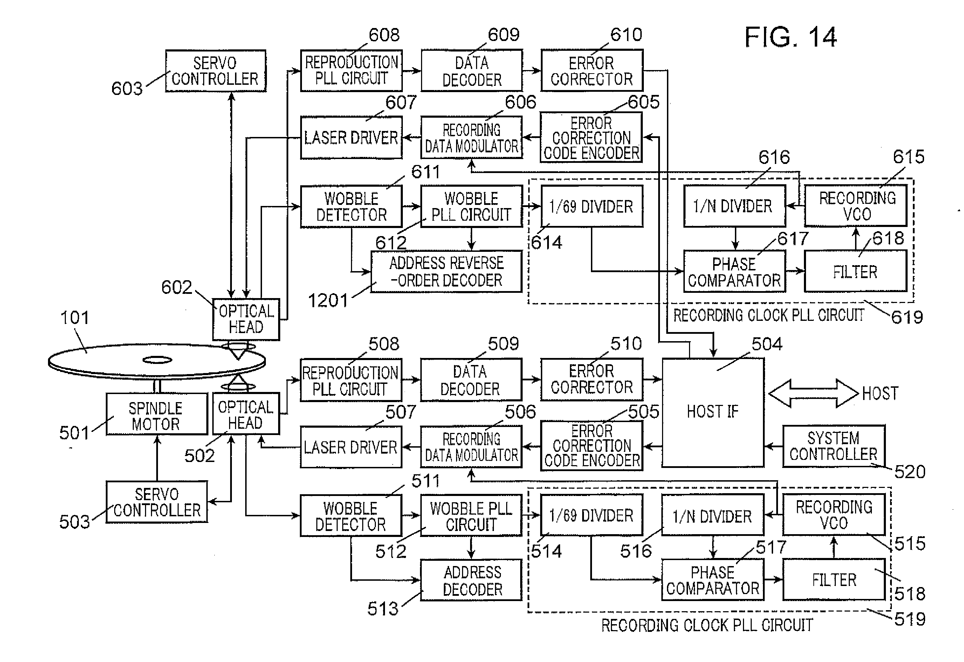

Fig. 14 is a block diagram showing a configuration of an optical disk device according to the third embodiment of the present invention. The optical disk device shown in Fig. 14 basically operates two optical disk devices according to the first embodiment in parallel. As a result, data can be simultaneously recorded on or reproduced from both recording surfaces of an optical disk recording medium.

In Fig. 14, the optical disk device comprises a spindle motor 501, optical heads 502 and 602, a servo controller 503, a host interface (I/F) 504, error correction code encoders 505 and 605, recording data modulators 506 and 606, laser drivers 507 and 607, reproduction PLL circuits 508 and 608, data decoders 509 and 609, error correctors 510 and 610, wobble detectors 511 and 611, wobble PLL circuits 512 and 612, an address decoder 513, 1/69 dividers 514 and 614, recording VCOs (voltage-controlled oscillators) 515 and 615, 1/N dividers 516 and 616, phase comparators 517 and 617, filters 518 and 618, a system controller 520, and an address reverse-order decoder 1201. In addition, a recording clock PLL circuit 519 comprises the 1/69 divider 514, the recording VCO 515, the 1/N divider 516, the phase comparator 517, and the filter 518. A recording clock PLL circuit 619 comprises the 1/69 divider 614, the recording VCO 615, the 1/N divider 616, the phase comparator 617, and the filter 618.

Configurations of the optical head 602, the error encoder 605, the recording data modulator 606, the laser driver 607, the reproduction PLL circuit 608, the data decoder 609, the error corrector 610, the wobble detector 611, the wobble PLL circuit 612, the 1/69 divider 614, the recording VCO 615, the 1/N divider 616, the phase comparator 617, and the filter 618 are respectively the same as the configurations of the optical head 502, the error correction code encoder 505, the recording data modulator 506, the laser driver 507, the reproduction PLL circuit 508, the data decoder 509, the error corrector 510, the wobble detector 511, the wobble PLL circuit 512, the 1/69 divider 514, the recording VCO 515, the 1/N divider 516, the phase comparator 517, and the filter 518.

A major difference of the third embodiment from the first embodiment is that the optical disk device comprises the address reverse-order decoder 1201. Due to the address reverse-order decoder 1201, an address can be demodulated even if a direction of rotation of the optical disk recording medium is a reverse direction. When simultaneously recording data on or reproducing data from both recording surfaces of an optical disk recording medium that is constructed by simply bonding together two optical disk recording media having a same structure, a spiral direction of one recording surface is the reverse of a spiral direction of the other recording surface. Therefore, address information that is recorded by a wobble on one recording surface is reproduced in a reverse order with respect to address information that is recorded by a wobble on the other recording surface. In the third embodiment of the present invention, the address reverse-order decoder 1201 demodulates address information that is read out in a reverse order. The address reverse-order decoder 1201 shifts a read-out address in a reverse direction. The system controller 520 records data based on the address shifted by the address reverse-order decoder 1201.

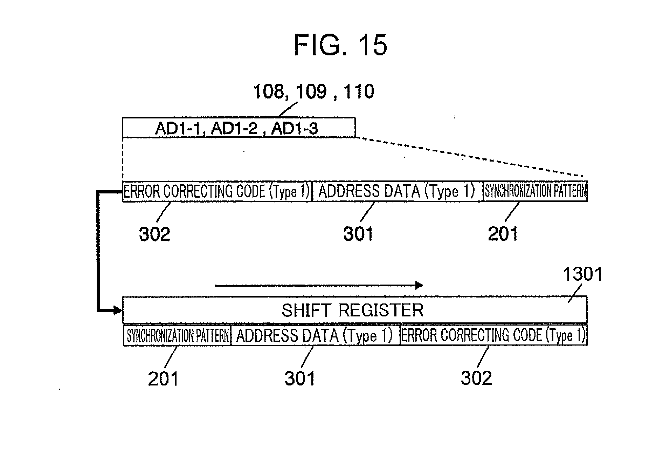

Fig. 15 is a diagram showing a configuration of the address reverse-order decoder shown in Fig. 14. The address reverse-order decoder 1201 includes a shift register 1301 which shifts an address in a reverse direction. The shift register 1301 sorts read-out addresses in an original reproduction direction. Accordingly, even if addresses are read out in a reverse direction, addresses can be readily demodulated.

Once addresses are demodulated, the optical disk device according to the present third embodiment is capable of recording or reproducing recording data even if recording data and addresses on the optical disk recording medium do not correspond to each other. By merely applying the mechanism of the first embodiment to the optical disk device according to the present third embodiment, data can be simultaneously recorded on or reproduced from both recording surfaces of an optical disk recording medium without altering the configuration in any way whatsoever. As described in the first embodiment, the optical disk device according to the present third embodiment is capable of altering allocation of recording data or recording density of recording data in an extremely flexible manner without altering a physical address structure of an optical disk recording medium, and flexibility, high density, and high volume density can be realized at unprecedented levels.

In addition, since the optical disk device according to the present third embodiment is capable of simultaneously recording data on or reproducing data from both recording surfaces of an optical disk recording medium which has recording surfaces formed on both sides, a volume density of the optical disk recording medium can be approximately tripled and a transfer rate of the optical disk recording medium can be doubled. Furthermore, with the optical disk device according to the present third embodiment, in the field of archive storage in which data is stored for a long period of time, a storage space of an optical disk recording medium can be reduced to approximately 1/3 and the transfer rate of the optical disk recording medium can be doubled. As a result, power consumption by a data center can be reduced and carbon dioxide emissions can also be reduced.

Moreover, the specific embodiments described above primarily include an invention configured as described below.

An optical disk recording medium according to an aspect of the present invention is an optical disk recording medium which records data and which comprises a groove track formed by a groove and a land track formed between adjacent groove tracks, wherein the groove track records address information representing information on a position within a recording surface of the optical disk recording medium by a predetermined pattern due to wobbling of the groove track, an integral multiple of a wobbling period of a portion of the groove track other than the address information is consistent with a length of one circumference of the groove track, an integral multiple of a period of the address information is consistent with the length of one circumference of the groove track, and pieces of information that differ between adjacent groove tracks among the address information are recorded by at least predetermined wobble patterns that differ between the adjacent groove tracks.

According to this configuration, a groove track is formed by a groove and a land track is formed between adjacent groove tracks. The groove track records address information representing information on a position within a recording surface of the optical disk recording medium by a predetermined pattern due to wobbling of the groove track. An integral multiple of a wobbling period of a portion of the groove track other than the address information is consistent with a length of one circumference of the groove track. In addition, an integral multiple of a period of the address information is consistent with the length of one circumference of the groove track. Furthermore, pieces of information that differ between adjacent groove tracks among the address information are recorded by at least predetermined wobble patterns that differ between the adjacent groove tracks.

Therefore, since an integral multiple of a wobbling period of a portion of the groove track other than the address information is consistent with a length of one circumference of the groove track and an integral multiple of a period of the address information is consistent with the length of one circumference of the groove track, a width of the land track can be set constant, data can be recorded on both the groove track and the land track, and a recording density of the optical disk recording medium can be increased.

In addition, since pieces of information that differ between the adjacent groove tracks among the address information are recorded by at least predetermined wobble patterns that differ between the adjacent groove tracks, address information can be demodulated without mutual interference from the adjacent groove tracks, and address information can even be demodulated from the land track between the adjacent groove tracks.

Furthermore, in the optical disk recording medium described above, favorably, information that is common between adjacent groove tracks among the address information is recorded by a predetermined wobble pattern that is common to the adjacent groove tracks.

According to this configuration, since information that is common between adjacent groove tracks among the address information is recorded by a predetermined wobble pattern that is common to the adjacent groove tracks, the number of necessary wobble patterns can be reduced.

In addition, in the optical disk recording medium described above, favorably, the predetermined wobble patterns for recording the pieces of information that differ between the adjacent groove tracks among the address information include a wobble pattern that is common between the adjacent groove tracks and the common wobble pattern is allocated with a predetermined central angle in a radial direction of the optical disk recording medium.

According to this configuration, since a wobble pattern that is common between the adjacent groove tracks is allocated with a predetermined central angle in a radial direction of the optical disk recording medium, data can be recorded on both a groove track and a land track without any interference between the groove track and the land track.

Furthermore, in the optical disk recording medium described above, favorably, a wobble signal corresponding to wobbling in a portion other than the address information is expressed as cos(ωt) + α × sin(2ωt), and a value of the coefficient α differs between two or more of the groove tracks.

According to this configuration, since the value of the coefficient α of a wobble signal that is expressed as cos(ωt) + α × sin(2ωt) differs between two or more groove tracks, a track jump can be readily detected by detecting the value of the coefficient α.

In addition, in the optical disk recording medium described above, favorably, the value of the coefficient α is equal to or smaller than approximately 0.3.

According to this configuration, since the value of the coefficient α is equal to or smaller than approximately 0.3, a track jump can be detected without affecting a reproduction signal of a land track.

Furthermore, in the optical disk recording medium described above, favorably, a recording start position of recording data that is recorded on the optical disk recording medium is consistent with a boundary of the address information.

According to this configuration, since a recording start position of recording data that is recorded on the optical disk recording medium is consistent with a boundary of the address information, recording data can be accurately recorded even if a size of address information and a size of recording data differ from each other.

In addition, in the optical disk recording medium described above, favorably, management information which associates a start address of a continuous area that is recorded on the optical disk recording medium and an address included in the recording data with each other is recorded in a predetermined area of the optical disk recording medium.

According to this configuration, management information which associates a start address of a continuous area recorded on the optical disk recording medium and an address included in recording data with each other is recorded in a predetermined area of the optical disk recording medium.

Therefore, even if a size of address information and a size of recording data differ from each other, data can be accurately recorded by referring to the management information.

An optical disk device according to another aspect of the present invention is an optical disk device which records data on an optical disk recording medium, the optical disk device comprising: a wobble signal detector which detects a wobble signal from the optical disk recording medium; a clock generator which generates a clock that is an integral multiple of the wobble signal; and a recording unit which records the data based on the clock generated by the clock generator, wherein the optical disk recording medium includes a groove track formed by a groove, and a land track formed between adjacent groove tracks, and wherein the groove track records address information representing information on a position within a recording surface of the optical disk recording medium by a predetermined pattern due to wobbling of the groove track, an integral multiple of a wobbling period of a portion of the groove track other than the address information is consistent with a length of one circumference of the groove track, an integral multiple of a period of the address information is consistent with the length of one circumference of the groove track, and pieces of information that differ between adjacent groove tracks among the address information are recorded by at least predetermined wobble patterns that differ between the adjacent groove tracks.

According to this configuration, the wobble signal detector detects a wobble signal from an optical disk recording medium. The clock generator generates a clock that is an integral multiple of the wobble signal. The recording unit records data based on the clock generated by the clock generator. The optical disk recording medium comprises a groove track formed by a groove and a land track formed between adjacent groove tracks. The groove track records address information representing information on a position within a recording surface of the optical disk recording medium by a predetermined pattern due to wobbling of the groove track. An integral multiple of a wobbling period of a portion of the groove track other than the address information is consistent with a length of one circumference of the groove track. An integral multiple of a period of the address information is consistent with the length of one circumference of the groove track. Pieces of information that differ between adjacent groove tracks among the address information are recorded by at least predetermined wobble patterns that differ between the adjacent groove tracks.

Therefore, since an integral multiple of a wobbling period of a portion of the groove track other than the address information is consistent with a length of one circumference of the groove track and an integral multiple of a period of the address information is consistent with the length of one circumference of the groove track, a width of the land track can be set constant, data can be recorded on both the groove track and the land track, and a recording density of the optical disk recording medium can be increased.

In addition, since pieces of information that differ between adjacent groove tracks among the address information are recorded by at least predetermined wobble patterns that differ between the adjacent groove tracks, address information can be demodulated without mutual interference from the adjacent groove tracks, and address information can even be demodulated from the land track between the adjacent groove tracks.

Furthermore, in the optical disk device described above, favorably, the recording surface of the optical disk recording medium is divided into a plurality of zones in a radial direction, a recording frequency or a recording rate is altered in each of the plurality of zones, and a start position of each of the plurality of zones, the recording unit conforms a record start position of recording data that is recorded on the optical disk recording medium to a boundary of the address information.

According to this configuration, the recording surface of the optical disk recording medium is divided into a plurality of zones in the radial direction. A recording frequency or a recording rate is altered in each of the plurality of zones. At a start position of each of the plurality of zones, the recording unit conforms a record start position of recording data that is recorded on the optical disk recording medium to a boundary of the address information.

Therefore, since a recording frequency or a recording rate is altered in each of the plurality of zones that are divided in the radial direction, recording line density can be set uniform between an inner circumferential side and an outer circumferential side of the recording surface of the optical disk recording medium.

In addition, in the optical disk device described above, favorably, when recording recording data on the optical disk recording medium, the recording unit records management information which associates a start address of a continuous area that is recorded on the optical disk recording medium and an address included in the recording data with each other.

According to this configuration, when recording recording data on the optical disk recording medium, the recording unit records management information which associates a start address of a continuous area that is recorded on the optical disk recording medium and an address included in the recording data with each other.

Therefore, even if a size of address information and a size of recording data differ from each other, data can be accurately recorded by referring to the management information.

Furthermore, in the optical disk device described above, favorably, the recording unit records the management information at a predetermined position on the optical disk recording medium.

According to this configuration, data can be accurately reproduced by reading out management information recorded at a predetermined position on the optical disk recording medium.

In addition, in the optical disk device described above, favorably, when a defect area having a defect exists on the optical disk recording medium and recording is interrupted due to the defect area, the optical disk device performs an alternation process in which data to be recorded in the defect area is recorded in an alternate area, and a size of recording data that is recorded in the alternate area of the optical disk recording medium which is used for the alternation process is greater than a size of an area from interruption to restart a recording.

According to this configuration, since a size of recording data that is recorded in an alternate area of an optical disk recording medium which is used for an alternation process is greater than a size of an area from interruption to restart of recording, a reduction in data volume in an area from interruption to restart of recording can be prevented.

Furthermore, favorably, the optical disk device described above further comprises a synchronous detector which detects a coefficient value of a sin(2ωt) component that is included in a wobble signal that corresponds to wobbling in a portion other than the address information, wherein the recording unit determines whether or not a tracking offset has occurred based on the coefficient value detected by the synchronous detector, and when it is determined that a tracking offset has occurred, the recording unit interrupts a recording operation.

According to this configuration, the synchronous detector detects a coefficient value of a sin(2ωt) component that is included in a wobble signal that corresponds to wobbling in a portion other than the address information. In addition, the recording unit determines whether or not a tracking offset has occurred based on the coefficient value detected by the synchronous detector, and when it is determined that a tracking offset has occurred, the recording unit interrupts a recording operation.

Therefore, a track jump can be readily detected by detecting a coefficient value of a sin(2ωt) component included in a wobble signal.

Furthermore, favorably, the optical disk device described above further comprises an address reverse-order decoder which shifts read-out address information in a reverse direction, wherein the recording unit records data based on an address shifted by the address reverse-order decoder.

According to this configuration, the address reverse-order decoder shifts read-out address information in a reverse direction. In addition, the recording unit records data based on an address shifted by the address reverse-order decoder.

Therefore, since address information can be acquired from an optical disk recording medium which rotates in a direction that is the reverse of a direction that enables address information to be read out normally, data can be simultaneously recorded on or reproduced from both recording surfaces of an optical disk recording medium that is constructed by simply bonding together two optical disk recording media having a same structure.

A recording method according to another aspect of the present invention is a recording method of recording data on an optical disk recording medium, the recording method comprising: a wobble signal detecting step of detecting a wobble signal from the optical disk recording medium; a clock generating step of generating a clock that is an integral multiple of the wobble signal; and a recording step of recording the data based on the clock generated in the clock generating step, wherein the optical disk recording medium includes a groove track formed by a groove, and a land track formed between adjacent groove tracks, and wherein the groove track records address information representing information on a position within a recording surface of the optical disk recording medium by a predetermined pattern due to wobbling of the groove track, an integral multiple of a wobbling period of a portion of the groove track other than the address information is consistent with a length of one circumference of the groove track, an integral multiple of a period of the address information is consistent with the length of one circumference of the groove track, and pieces of information that differ between adjacent groove tracks among the address information are recorded by at least predetermined wobble patterns that differ between the adjacent groove tracks.

According to this configuration, in the wobble signal detecting step, a wobble signal is detected from an optical disk recording medium. In the clock generating step, a clock that is an integral multiple of the wobble signal is generated. In the recording step, data is recorded based on the clock generated in the clock generating step. The optical disk recording medium comprises a groove track formed by a groove and a land track formed between adjacent groove tracks. The groove track records address information representing information on a position within a recording surface of the optical disk recording medium by a predetermined pattern due to wobbling of the groove track. An integral multiple of a wobbling period of a portion of the groove track other than the address information is consistent with a length of one circumference of the groove track. An integral multiple of a period of the address information is consistent with the length of one circumference of the groove track. Pieces of information that differ between adjacent groove tracks among the address information are recorded by at least predetermined wobble patterns that differ between the adjacent groove tracks.

Therefore, since an integral multiple of a wobbling period of a portion of the groove track other than the address information is consistent with a length of one circumference of the groove track and an integral multiple of a period of the address information is consistent with the length of one circumference of the groove track, a width of the land track can be set constant, data can be recorded on both the groove track and the land track, and a recording density of the optical disk recording medium can be increased.

In addition, since pieces of information that differ between adjacent groove tracks among the address information are recorded by at least predetermined wobble patterns that differ between the adjacent groove tracks, address information can be demodulated without mutual interference from the adjacent groove tracks, and address information can even be demodulated from the land track between the adjacent groove tracks.

It is to be understood that the specific embodiments or examples described in Description of Embodiments are merely illustrative of the technical contents of the present invention, and that the present invention should not be construed as being limited to such specific examples. Obviously, many modifications and variations of the present invention are possible without departing from the spirit of the invention and the scope of the following claims.

### Industrial Applicability

The optical disk recording medium, the optical disk device, and the recording method according to the present invention are capable of improving recording density, transfer rate, and volume density of an optical disk recording medium due to multi-value recording and are useful as an optical disk recording medium, an optical disk device which records data on the optical disk recording medium, and a recording method.

## Claims

1. An optical disk recording medium which records data, comprising:
a groove track formed by a groove; and
a land track formed between adjacent groove tracks, wherein
the groove track records address information representing information on a position within a recording surface of the optical disk recording medium by a predetermined pattern due to wobbling of the groove track,
an integral multiple of a wobbling period of a portion of the groove track other than the address information is consistent with a length of one circumference of the groove track,
an integral multiple of a period of the address information is consistent with the length of one circumference of the groove track, and
pieces of information that differ between adjacent groove tracks among the address information are recorded by at least predetermined wobble patterns that differ between the adjacent groove tracks.

2. The optical disk recording medium according to claim 1, wherein information that is common between adjacent groove tracks among the address information is recorded by a predetermined wobble pattern that is common to the adjacent groove tracks.

3. The optical disk recording medium according to claim 1 or 2, wherein
the predetermined wobble patterns for recording the pieces of information that differ between the adjacent groove tracks among the address information include a wobble pattern that is common between the adjacent groove tracks, and
the common wobble pattern is allocated with a predetermined central angle in a radial direction of the optical disk recording medium.

4. The optical disk recording medium according to any one of claims 1 to 3, wherein
a wobble signal corresponding to wobbling in a portion other than the address information is expressed as cos(ωt) + α × sin(2ωt), and
a value of the coefficient α differs between two or more of the groove tracks.

5. The optical disk recording medium according to claim 4, wherein the value of the coefficient α is equal to or smaller than approximately 0.3.

6. The optical disk recording medium according to any one of claims 1 to 5, wherein a recording start position of recording data that is recorded on the optical disk recording medium is consistent with a boundary of the address information.

7. The optical disk recording medium according to any one of claims 1 to 6, wherein management information which associates a start address of a continuous area recorded on the optical disk recording medium and an address included in the recording data with each other is recorded in a predetermined area of the optical disk recording medium.

8. An optical disk device which records data on an optical disk recording medium, comprising:
a wobble signal detector which detects a wobble signal from the optical disk recording medium;
a clock generator which generates a clock that is an integral multiple of the wobble signal; and
a recording unit which records the data based on the clock generated by the clock generator, wherein
the optical disk recording medium includes:
a groove track formed by a groove; and
a land track formed between adjacent groove tracks, and wherein
the groove track records address information representing information on a position within a recording surface of the optical disk recording medium by a predetermined pattern due to wobbling of the groove track,
an integral multiple of a wobbling period of a portion of the groove track other than the address information is consistent with a length of one circumference of the groove track,
an integral multiple of a period of the address information is consistent with the length of one circumference of the groove track, and
pieces of information that differ between adjacent groove tracks among the address information are recorded by at least predetermined wobble patterns that differ between the adjacent groove tracks.

9. The optical disk device according to claim 8, wherein
the recording surface of the optical disk recording medium is divided into a plurality of zones in a radial direction,
a recording frequency or a recording rate is altered in each of the plurality of zones, and
at a start position of each of the plurality of zones, the recording unit conforms a record start position of recording data that is recorded on the optical disk recording medium to a boundary of the address information.

10. The optical disk device according to claim 8 or 9, wherein, when recording recording data on the optical disk recording medium, the recording unit records management information which associates a start address of a continuous area that is recorded on the optical disk recording medium and an address included in the recording data with each other.

11. The optical disk device according to claim 10, wherein the recording unit records the management information at a predetermined position on the optical disk recording medium.

12. The optical disk device according to any one of claims 8 to 11, wherein
when a defect area having a defect exists on the optical disk recording medium and recording is interrupted due to the defect area, the optical disk device performs an alternation process in which data to be recorded in the defect area is recorded in an alternate area, and
a size of recording data that is recorded in the alternate area of the optical disk recording medium which is used for the alternation process is greater than a size of an area from interruption to restart of recording.

13. The optical disk device according to any one of claims 8 to 12, further comprising
a synchronous detector which detects a coefficient value of a sin(2ωt) component that is included in a wobble signal that corresponds to wobbling in a portion other than the address information, wherein
the recording unit determines whether or not a tracking offset has occurred based on the coefficient value detected by the synchronous detector, and when it is determined that a tracking offset has occurred, the recording unit interrupts a recording operation.

14. The optical disk device according to any one of claims 8 to 12, further comprising
an address reverse-order decoder which shifts read-out address information in a reverse direction, wherein
the recording unit records data based on an address shifted by the address reverse-order decoder.

15. A recording method of recording data on an optical disk recording medium, comprising:
a wobble signal detecting step of detecting a wobble signal from the optical disk recording medium;
a clock generating step of generating a clock that is an integral multiple of the wobble signal; and
a recording step of recording the data based on the clock generated in the clock generating step, wherein
the optical disk recording medium includes:
a groove track formed by a groove; and
a land track formed between adjacent groove tracks, and wherein
the groove track records address information representing information on a position within a recording surface of the optical disk recording medium by a predetermined pattern due to wobbling of the groove track,
an integral multiple of a wobbling period of a portion of the groove track other than the address information is consistent with a length of one circumference of the groove track,
an integral multiple of a period of the address information is consistent with the length of one circumference of the groove track, and
pieces of information that differ between adjacent groove tracks among the address information are recorded by at least predetermined wobble patterns that differ between the adjacent groove tracks.
